# EUROPÄISCHE PATENTSCHRIFT

(11) **EP 2 145 908 B1**
(45) Veröffentlichungstag und Bekanntmachung des Hinweises auf die Patenterteilung: **24.03.2010**
(21) Anmeldenummer: 08160637.8
(22) Anmeldetag: 17.07.2008
(51) Int. Cl.: C08G 59/02

(54) **Haftvermittlerverbindungen für beölten Stahl**
Adhesive compounds for oiled steel
Liaisons d'agents adhésifs pour acier huilé

(43) Veröffentlichungstag der Anmeldung: 20.01.2010
(73) Patentinhaber: Sika Technology AG, 6340 Baar (CH)
(72) Erfinder: Kramer, Andreas, 8006, Zürich (CH); Finter, Jürgen, 8037, Zürich (CH)
(74) Vertreter: Sika Patent Attorneys

(56) Entgegenhaltungen:
- WO-A-02/42349
- WO-A-96/32454
- US-A1- 2003 187 155
- DATABASE WPI Week 199346 Thomson Scientific, London, GB; AN 1993-365477 XP002500370 & JP 05 271640 A (UBE IND LTD) 19. Oktober 1993 (1993-10-19)

## Beschreibung

### Technisches Gebiet

Die Erfindung betrifft das Gebiet der hitzehärtenden und zweikomponentigen Epoxidharzzusammensetzungen, insbesondere für den Einsatz als Klebstoffe oder Haftvermittler für das Verkleben von Metallen.

### Stand der Technik

Klebstoffe basierend auf hitzehärtenden und zweikomponentigen Epoxidharzzusammensetzungen sind seit langem bekannt. Ein wichtiges Einsatzgebiet von hitzehärtenden und zweikomponentigen Epoxidharzklebstoffen findet sich im Fahrzeugbau, insbesondere beim Verkleben von Fahrzeugteilen im Rohbau.
Es wurden schon seit einiger Zeit Anstrengungen unternommen, die Haftung dieser Epoxidharzklebstoffe auf schwierigen Substraten mit Hilfe von Haftvermittlern zu verbessern. Besonders Fahrzeugteile aus Metall, die Ölrückstände aus dem Prozess des Tiefziehens aufweisen, stellen für diese Haftvermittler jedoch eine besondere Herausforderung dar. Der Haftvermittler muss sowohl auf den beölten als auch auf den nicht beölten Stellen des Metalls eine gute Haftung vermitteln können. Mit Hilfe von konventionellen Haftvermittlern ist eine Verbesserung der Haftung auf beölten Substraten nicht möglich.

### Darstellung der Erfindung

Aufgabe der vorliegenden Erfindung ist es daher, eine Verbindung zur Verfügung zu stellen, welche als Haftvermittler oder Haftvermittlerbestandteil eine Verbesserung der Haftung auf beölten Substraten, insbesondere beölten Metallen, zeigt.
Überraschenderweise wurde nun gefunden, dass Verbindungen gemäss Anspruch 1 diese Aufgabe zu lösen vermögen.
Ein weiterer Vorteil derartiger bevorzugten Verbindungen ist, dass sie dank ihrer Epoxidgruppen bei Verwendung in einem hitzehärtenden Expoxidharzklebstoff während der Aushärtung in den Klebstoff eingebaut werden. Des Weiteren hat sich gezeigt, dass diese Verbindungen die Aushärtung des Klebstoffs nicht behindern und eine gute Auswaschbeständigkeit aufweisen.
Es ist möglich, flüssige derartige Verbindungen herzustellen, die deshalb leicht dosiert und eingearbeitet werden können und den Einsatz von Lösungsmitteln weitgehend erübrigen.
Weiterhin zeigen derartige Verbindungen eine äusserst gute Benetzbarkeit des Substrats, was eine notwendige Voraussetzung zu deren Verwendung als Haftvermittler darstellt.
Ein weiterer Vorteil ist, dass die Verbindung gemäss Anspruch 1 farbig sein kann, was den Nachweis der Verbindung gemäss Anspruch 1 nach ihrer Applikation erleichtert.
Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt betrifft die vorliegende Erfindung eine Verbindung der Formel (I)

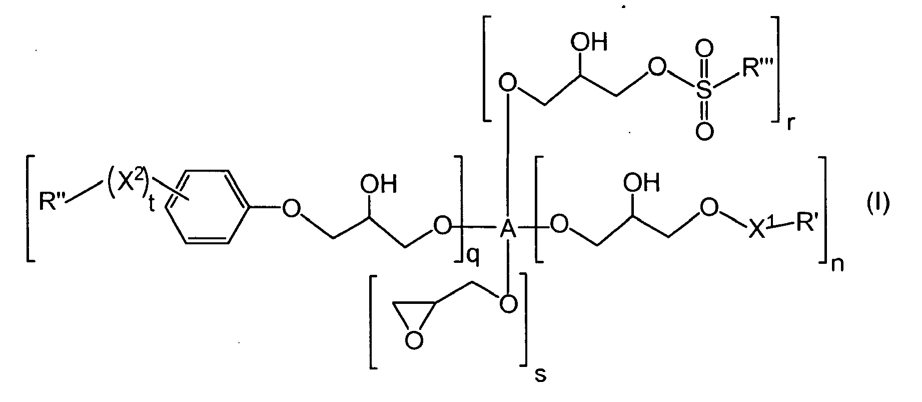

In der Formel (I) steht A für ein (n + q + r + s)-wertiges Polyol **A1** nach Entfernung der (n + q + r + s) Hydroxylgruppen.
X¹ steht für 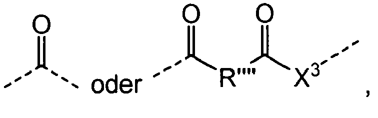 X² für 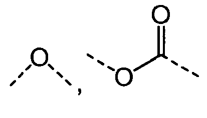 oder 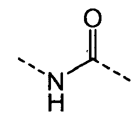 und X³ für O oder NH.

Weiterhin steht R' für einen, allenfalls verzweigten, gesättigten oder ungesättigten Alkylrest mit 4 bis 30, insbesondere 6 bis 20 C-Atomen.
R" steht für H oder einen, allenfalls verzweigten, gesättigten oder ungesättigten Alkylrest mit 1 bis 30, insbesondere 6 bis 20 C-Atomen.
R"' steht für einen Alkylrest oder einen Alkylphenylrest mit 6 bis 30, insbesondere 6 bis 20 C-Atomen.
R"" steht für einen aromatischen, cycloaliphatischen oder aliphatischen zweiwertigen Rest mit 1 bis 10, insbesondere 2 bis 8 C-Atomen. Der aliphatische zweiwertige Rest ist allenfalls verzweigt, gesättigt oder ungesättigt.
Weiterhin weist t einen Wert von 0 oder 1, bevorzugt 0 auf. n, q, r und s weisen je Werte von 0 bis 5 auf, mit der Massgabe, dass von den Werten n, q und r mindestens zwei verschieden von Null sind. Insbesondere weist s einen Wert von 1 oder 2 auf und die Summe von (n + q + r + s) ist bevorzugt 3 oder 4.

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.
Die gestrichelten Linien in den Formeln dieses Dokumentes stellen jeweils die Bindung zwischen dem jeweiligen Substituenten und dem dazugehörigen Molekülrest dar.

In der gesamten hier vorliegenden Schrift werden mit der Vorsilbe , "Poly" in "Polyisocyanat", "Polyamin", "Polyol", "Polyphenol" und "Polymercaptan" Moleküle bezeichnet, die formal zwei oder mehr der jeweiligen funktionellen Gruppen enthalten.

Unter einem "Zähigkeitsverbesserer" wird in diesem Dokument ein Zusatz zu einer Matrix, insbesondere Epoxidharzmatrix verstanden, der bereits bei geringen Zuschlägen von 0.1 - 50 Gew.-%, insbesondere von 0.5 - 40 Gew.-%, eine deutliche Zunahme der Zähigkeit bewirkt und somit in der Lage ist, höhere Biege-, Zug-, Schlag- oder Stossbeanspruchung aufzunehmen, bevor die Matrix einreisst oder bricht.

Als amphiphiles Blockcopolymer wird im vorliegenden Dokument ein Copolymer verstanden, welches mindestens ein Blocksegment, welches mit Epoxidharz mischbar ist, und mindestens ein Blocksegment, welches mit Epoxidharz nicht mischbar ist, enthält. Insbesondere sind amphiphile Blockcopolymere solche, wie sie offenbart werden in WO 2006/052725 A1, WO 2006/052726 A1, WO 2006/052727 A1, WO 2006/052728 A1, WO 2006/052729 A1, WO 2006/052730 A1, WO 2005/097893 A1, deren Inhalt hiermit durch Bezugnahme eingeschlossen wird.

Unter einem "Haftvermittler" wird im vorliegenden Dokument eine Verbindung verstanden, welche dazu dient, die Haftung eines Klebstoffs oder Dichtstoffs oder einer Beschichtung auf der betreffenden Substratoberfläche zu verbessern.

Das Polyol **A1** ist insbesondere ein aliphatisches, cycloaliphatisches oder aromatisches, bevorzugt ein aliphatisches Polyol.
Als Polyole **A1** sind insbesondere geeignet Polyole, die ausgewählt sind aus der Gruppe bestehend aus Pentaerythrit (= 2,2-Bis-hydroxymethyl-1,3-propandiol), Dipentaerythrit (= 3-(3-Hydroxy-2,2-bis-hydroxymethyl-propoxy)-2,2-bis-hydroxymethyl-propan-1-ol), Glycerin (= 1,2,3-Propantriol), Trimethylolpropan (= 2-Ethyl-2-(hydroxymethyl)-1,3-propandiol), Trimethylolethan (= 2-(hydroxymethyl)-2-Methyl-1,3-propandiol), Di(trimethylolpropan) (= 2,2'-oxybis(methylen)bis(2-ethylpropan-1,3-diol)), Di(trimethylolethan) (= 2,2'-oxybis(methylen)bis(2-methylpropan-1,3-diol)), Diglycerin (= Bis-(2,3-dihydroxypropyl)-ether) und Triglycerin (= 1,3-Bis-(2,3-dihydroxypropyl)-2-propanol).
Als Polyole **A1** sind Pentaerythrit, Glycerin, Trimethylolpropan und Trimethylolethan bevorzugt.

Formel (I) lässt sich auf verschiedene Arten herstellen. In einer ersten Variante zur Herstellung wird die Verbindung der Formel (I) aus der Reaktion eines Polyepoxids **E1** der Formel (III) mit einer Carbonsäure der Formel (IIIα) und/oder einer Sulfonsäure der Formel (IIIβ) und/oder eines Phenols der Formel (IIIγ) erhalten. Der Index t' hat einen Wert von 0 oder 1.

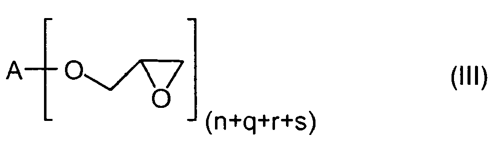

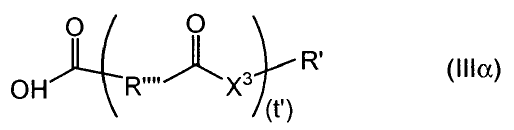

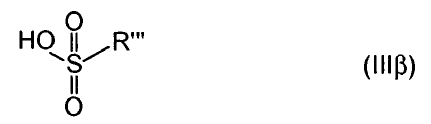

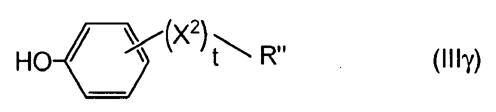

Es gilt jedoch die Massgabe, dass die Verbindung der Formel (I) mindestens einen Rest aus mindestens zwei verschiedenen der folgenden Gruppen aufweist:
- Gruppe α 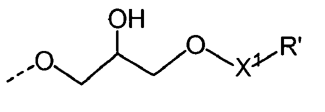
- Gruppe β 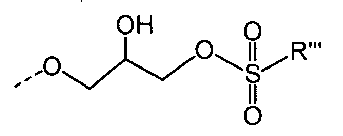
- Gruppe γ

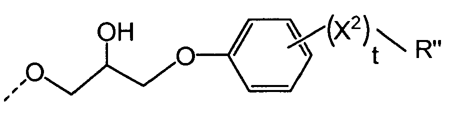

Mögliche Kombinationen der erwähnten Gruppen sind also α + β, α + γ, β + γ sowie α + β + γ.

Die (n + q + r + s)-wertigen Epoxidverbindungen **E1** der Formel (III) lassen sich beispielsweise durch Umsetzung von Polyolen **A1** mit Epichlorhydrin erzeugen, wie es in Patent US 5,668,227 in Beispiel 1 für die Reaktion von Trimethylolpropan und Epichlorhydrin mit Tetramethylammoniumchlorid und Natronlauge beschrieben ist.
Die Umsetzung des Polyepoxids **E1** der Formel (III) mit Verbindungen der Formel (IIIα) und/oder Verbindungen der Formel (IIIβ) und/oder Verbindungen der Formel (IIIγ) kann sequentiell oder mit einer Mischung dieser Verbindungen erfolgen. Selbstverständlich können auch Mischungen von Polyepoxiden **E1** der Formel (III) und/oder Mischungen von Verbindungen der Formel (IIIα) und/oder Mischungen von Verbindungen der Formel (IIIβ) und/oder Mischungen von Verbindungen der Formel (IIIγ) eingesetzt werden.

Bevorzugt erfolgt die Umsetzung derart, dass die Epoxidgruppen von Polyepoxid **E1** gegenüber der Summe der Epoxidreaktiven Gruppen von (IIIα), (IIIβ) und (IIIγ) im stöchiometrischen Überschuss vorhanden sind.
Bevorzugt erfolgt die Umsetzung derart, so dass die Verbindung der Formel (I) Epoxidgruppen aufweist, typischerweise dass 5 - 95%, insbesondere 10 - 90%, bevorzugt 20 - 80% der Summe der Epoxidgruppen aller Polyepoxide **E1** mit der Summe der Epoxidreaktiven Gruppen von (IIIα), (IIIβ) und (IIIγ) reagiert haben.
Bevorzugt erfolgt die Umsetzung derart, dass das molare Verhältnis von (IIIα) zu (IIIβ) und/oder das Verhältnis (IIIα) zu (IIIγ) und/oder das Verhältnis (IIIβ) zu (IIIγ) von 0.05 - 20, insbesondere 0.1 - 20, bevorzugt von 0.2 - 5 beträgt.

Beispiele von geeigneten Carbonsäuren der Formel (IIIα) sind einerseits:
- gesättigte Monocarbonsäuren wie Pentansäure, Hexansäure, Heptansäure, Octansäure, Nonansäure, Decansäure, Dodecansäure, Tetradecansäure, Hexadecansäure, Heptadecansäure, Octadecansäure, Eicosansäure, Docosansäure, Tetracosansäure, Hexacosansäure, Octacosansäure, Triacontansäure oder 2-Ethyl-hexansäure, insbesondere Dodecansäure, Tetradecansäure, Hexadecansäure, Heptadecansäure, Octadecansäure, Eicosansäure, Docosansäure, Tetracosansäure, Hexacosansäure, Octacosansäure oder Triacontansäure.
- einfach oder mehrfach ungesättigte Monocarbonsäuren wie Palmitolein-, Öl-, Elaidin-, Petroselin-, Eurca-, Linol-, Linolen-, Elaeostearin-, Arachidon-, Clupanodon-, Docosahexaen- oder Gadoleinsäure, insbesondere Palmitolein-, Öl-, Linol-, Linolen- oder Arachidonsäure.

Weitere Beispiele von geeigneten Carbonsäuren der Formel (IIIα) sind andererseits Monoester oder Monoamide von Dicarbonsäuren. Beispiele für derartige Dicarbonsäuren sind Malonsäure, Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Isophthalsäure, Terephthalsäure, Hexahydrophthalsäure, und Tricarbonsäure. Bei der Verwendung von derartigen Verbindungen resultieren Verbindungen der Formel (I), bei welchen X¹ für 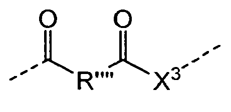 und X³ für O oder NH steht.

Beispiele von geeigneten Sulfonsäuren der Formel (IIIβ) sind: aliphatische und aromatische Sulfonsäuren wie Hexansulfonsäure, Heptansulfonsäure, Octansulfonsäure, Decansulfonsäure, Dodecansulfonäure, Hexadecansulfonsäure, Benzolsulfonsäure, p-Toluolsulfonsäure, 4-Ethylbenzolsulfonsäure, 4-Vinylbenzolsulfonsäure, Xylolsulfonsäure, 4-Octylbenzolsulfonsäure, Dodecylbenzolsulfonsäure, p-Xylol-2-sulfonsäure, 2-Mesitylensulfonsäure, 1-Naphtalensulfonsäure, 2-Naphtalensulfonsäure, Dihexylsuccinatsulfonsäure, Dioctylsuccinatsulfonsäure, insbesondere Dodecansulfonäure, Hexadecansulfonsäure, 4-Octylbenzolsulfonsäure, Dodecylbenzolsulfonsäure, Dihexylsuccinatsulfonsäure, Dioctylsuccinatsulfonsäure.

Beispiele von geeigneten Phenolen der Formel (IIIγ) sind einerseits alkyl-substituierten Monophenole wie Phenol, t-Butylphenol, Nonylphenol, Dodecylphenol, 3-Pentadecenylphenol (Cardanol).

Weitere Beispiele von geeigneten Phenolen der Formel (IIIγ) sind andererseits Monoether von Dihydroxybenzolen wie Resorcin, Hydrochinon und Brenzkatechin, sowie Ester oder Amide von 3- oder 2-Hydroxybenzoesäure beziehungsweise Hydroxybenzamid. Bei der Verwendung von derartigen Verbindungen resultieren Verbindungen der Formel (I),bei welchen X² für 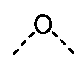 steht oder bei welchen X² für 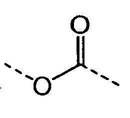 oder 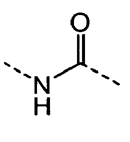 steht.

In einer zweiten Variante zur Herstellung wird die Verbindung der Formel (I) aus der Reaktion eines (n + q + r + s)-wertigen Polyols **A1** der Formel (III') mit mindestens einem Glycidylcarbonsäureester der Formel (III'α) und/oder mindestens einem Glycidylsulfonsäureester der Formel (III'β) und/oder mindestens einem Glycidylether der Formel (III'γ) erhalten.

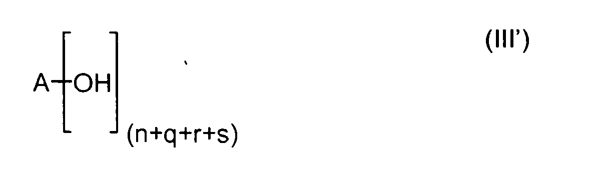

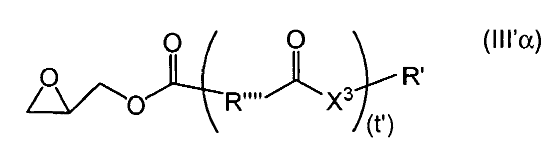

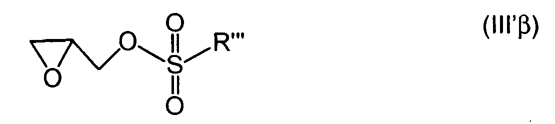

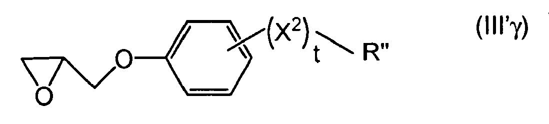

Es gilt jedoch die Massgabe, dass die Verbindung der Formel (I) mindestens einen Rest aus mindestens zwei verschiedenen der folgenden Gruppen aufweist:
- Gruppe α 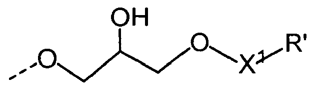
- Gruppe β 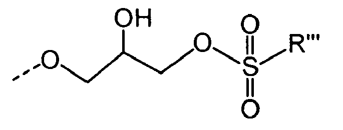
- Gruppe γ

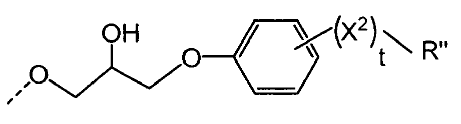

Mögliche Kombinationen der erwähnten Gruppen sind also α + β, α + γ, β + γ sowie α + β + γ.

Die Umsetzung kann beispielsweise während einiger Stunden bei erhöhter Temperatur, wie beispielsweise zwischen 100 und 200°C, durch Rühren unter Vakuum ausgeführt werden. Gegebenenfalls können Katalysatoren anwesend sein.
Die Umsetzung des Polyols **A1** der Formel (III') mit einem Glycidylcarbonsäureester der Formel (III'α) und/oder einem Glycidylsulfonsäureester der Formel (III'β) und/oder einem Glycidylether der Formel (III'γ) kann sequentiell oder mit einer Mischung dieser Verbindungen erfolgen. Selbstverständlich können auch Mischungen des Polyols **A1,** sowie Mischungen von Verbindungen der Formel (III'α) und/oder Mischungen von Verbindungen der Formel (III'β) und/oder Mischungen von Verbindungen der Formel (III'γ) eingesetzt werden.
Bevorzugt erfolgt die Umsetzung derart, dass die Summe der Epoxidgruppen von Verbindungen der Formel (III'α), Verbindungen der Formel (III'β) und Verbindungen der Formel (III'γ) gegenüber den Hydroxylgruppen des Polyols **A1** im stöchiometrischen Überschuss vorhanden ist.

Geeignete Verbindungen der Formel (III'α), respektive Verbindungen der Formel (III'β), respektive Verbindungen der Formel lassen sich beispielsweise durch Umsetzung der vorhergehend erwähnten Verbindungen der Formel (IIIα), respektive Verbindungen der Formel (IIIβ), respektive Verbindungen der Formel (IIIγ), mit Epichlorhydrin erzeugen.

In einem weiteren Aspekt betrifft die vorliegende Erfindung eine hitzehärtende Epoxidharzzusammensetzung enthaltend
- mindestens ein Epoxidharz **EH** mit durchschnittlich mehr als einer Epoxidgruppe pro Molekül;
- mindestens einen Härter **B** für Epoxidharze, welcher durch erhöhte Temperatur aktiviert wird; sowie
- mindestens eine Verbindung der Formel (I), wie sie vorgängig im Detail beschrieben wurde.

Das Epoxidharz **EH** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.
Bevorzugte Epoxidharze weisen die Formel (II) auf

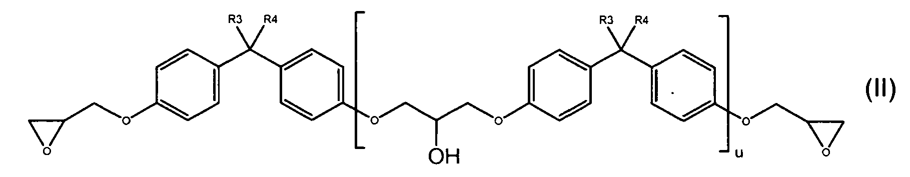

Hierbei stehen die Substituenten R3 und R4 unabhängig voneinander entweder für H oder CH₃.
Bei Epoxid-Festharzen steht der Index u für einen Wert von > 1.5, insbesondere von 2 bis 12.
Derartige Epoxid-Festharze sind kommerziell erhältlich beispielsweise von Dow oder Huntsman oder Hexion.
Verbindungen der Formel (II) mit einem Index u von 1 bis 1.5 werden vom Fachmann als Semisolid-Epoxidharze bezeichnet. Für die hier vorliegende Erfindung werden sie ebenfalls als Festharze betrachtet. Bevorzugt als Epoxid-Festharze sind jedoch Epoxidharze im engeren Sinn, d.h. wo der Index u einen Wert von > 1.5 aufweist.
Bei Epoxid-Flüssigharze steht der Index u für einen Wert von kleiner als 1. Bevorzugt steht u für einen Wert von kleiner als 0.2.
Es handelt sich somit vorzugsweise um Diglycidylether von Bisphenol-A (BADGE), von Bisphenol-F sowie von Bisphenol-A/F. Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.
Weiterhin geeignet als Epoxidharz **EH** sind sogenannte Novolake. Diese weisen insbesondere die folgende Formel auf: 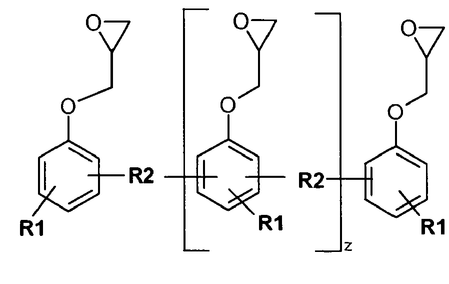 mit **R2**= 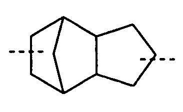 oder CH₂, **R1** = H oder Methyl und z = 0 bis 7.

Insbesondere handelt es sich hierbei um Phenol- oder Kresol-Novolake (**R2** = CH₂).
Solche Epoxidharze sind unter dem Handelnamen EPN oder ECN sowie Tactix® von Huntsman oder unter der Produktereihe D.E.N.™ von Dow Chemical kommerziell erhältlich.

Bevorzugt stellt das Epoxidharz **EH** ein Epoxid-Flüssigharz der Formel (II) dar. In einer noch mehr bevorzugten Ausführungsform enthält die hitzehärtende Epoxidharzzusammensetzung sowohl mindestens ein Epoxid-Flüssigharz der Formel (II) mit u < 1 als auch mindestens ein Epoxid-Festharz der Formel (II) mit u > 1.5.

Der Gewichtsanteil an Epoxidharz **EH** beträgt 5 - 80 Gew.-%, insbesondere 10 - 75 Gew.-%, bevorzugt 15 - 70 Gew.-%, bezogen auf das Gewicht der hitzehärtenden Epoxidharzzusammensetzung.

Bei dem Härter **B** für Epoxidharze, welcher durch erhöhte Temperatur aktiviert wird, handelt es sich vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron), N,N-Dimethylharnstoff, N-iso-Butyl-,N',N'-dimethylharnstoff, Addukte von Diisocyanaten und Dialkylaminen. Beispiele für derartige Addukte von Diisocyanaten und Dialkylaminen sind 1,1'-(Hexan-1,6-diyl)bis(3,3'-dimethylharnstoff), welches einfach durch die Reaktion von Hexamethylendiisocyanat (HDI) und Dimethylamin zugänglich ist oder die Harnstoffverbindung, welche bei der Addition von Isophorondiisocyanat (IPDI) an Dimethylamin entsteht. Weiterhin können Verbindungen der Klasse der Imidazole, Imidazoline und Amin-Komplexe eingesetzt werden.

Bevorzugt handelt es sich beim Härter **B** um einen Härter, welcher welcher ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), N,N-Dimethylharnstoff, N-isoButyl-,N',N'-dimethylharnstoff, 1,1'-(Hexan-1,6-diyl)bis(3,3'-dimethylharnstoff) sowie. Imidazole, Imidazol-Salze, Imidazoline und Amin-Komplexe
Besonders bevorzugt als Härter **B** ist Dicyandiamid.

Vorteilhaft beträgt der Gesamtanteil des Härters **B** 0.01 - 20 Gew.-%, vorzugsweise 0.1 - 15 Gew.-%, bezogen auf das Gewicht der hitzehärtenden Epoxidharzzusammensetzung.
Besonders bevorzugt beträgt die Menge des Härters **B** für Epoxidharze, welcher durch erhöhte Temperatur aktiviert wird, 0.2 - 10 Gew.- %, insbesondere 0.5- 7 Gew.-%, bezogen auf das Gewicht des Epoxidharzes **EH.**

Die Verbindung der Formel (I) wurde vorgehend schon erwähnt. Typischerweise beträgt der Anteil an Verbindung der Formel (I) 0.001 - 20 Gew.-%, insbesondere 0.5 - 15 Gew.-%, bevorzugt 4 - 10 Gew.-%, bezogen auf das Gewicht der hitzehärtenden Epoxidharzzusammensetzung.

Die hitzehärtende Epoxidharzzusammensetzung enthält vorzugsweise mindestens einen Zähigkeitsverbesserer **D.** Die Zähigkeitsverbesserer **D** können fest oder flüssig sein.
Insbesondere ist der Zähigkeitsverbesserer **D** ausgewählt ist aus der Gruppe bestehend aus blockierten Polyurethanpolymeren, Flüssigkautschuken, Epoxidharz-modifizierten Flüssigkautschuken, Blockcopolymeren und Core-Shell-Polymeren.

In einer Ausführungsform ist dieser Zähigkeitsverbesserer **D** ein Flüssigkautschuk **D1,** welcher ein Acrylonitil/Butadien-Copolymer ist, welches mit Carboxylgruppen oder (Meth)acrylatgruppen oder Epoxidgruppen terminiert ist, oder ein Derivat davon ist. Derartige Flüssigkautschuke sind beispielsweise unter dem unter dem Namen Hypro™(früher Hycar®) CTBN und CTBNX und ETBN von Nanoresins AG, Deutschland, bzw. Emerald Performance Materials LLC) kommerziell erhältlich. Als Derivate sind insbesondere Epoxidgruppen aufweisende Elastomer-modifizierte Prepolymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden, geeignet.
In einer weiteren Ausführungsform ist der Zähigkeitsverbesserer **D** ein Polyacrylatflüssigkautschuk **D2,** der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.
Es ist dem Fachmann klar, dass natürlich auch Mischungen von Flüssigkautschuken verwendet werden können, insbesondere Mischungen von carboxyl- oder epoxidterminiertes Acrylnitril/Butadien-Copolymeren oder Derivaten davon mit epoxidterminierten Polyurethanprepolymeren.
In einer weiteren Ausführungsform ist der Zähigkeitsverbesserer **D** ein fester Zähigkeitsverbesserer, welcher ein organisches Ionen-getauschtes Schichtmineral **DE1** ist.

Das Ionen-getauschte Schichtmineral **DE1** kann entweder ein Kationen-getauschtes Schichtmineral **DE1c** oder ein Anionen-getauschtes Schichtmineral **DE1a** sein.

Das Kationen-getauschte Schichtmineral **DE1c** wird hierbei erhalten aus einem Schichtmineral **DE1',** bei welchem zumindest ein Teil der Kationen durch organische Kationen ausgetauscht worden sind. Beispiele für derartige Kationen-getauschte Schichtmineralien **DE1c** sind insbesondere diejenigen, welche in US 5,707,439 oder in US 6,197,849 erwähnt sind. Ebenso ist dort das Verfahren zur Herstellung dieser Kationen-getauschten Schichtminerale **DE1c** beschrieben. Bevorzugt als Schichtmineral **DE1'** ist ein Schichtsilikat. Insbesondere bevorzugt handelt es sich beim Schichtmineral **DE1'** um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich Schichtmineral **DE1'** wie Kaolinit oder ein Montmorillionit oder ein Hectorit oder ein Illit gezeigt.
Zumindest ein Teil der Kationen des Schichtminerals **DE1'** wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidinium Kationen oder Amidiniumkationen; oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azobicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol, Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann.
Bevorzugte Kationen-getauschte Schichtminerale **DE1c** sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) oder Garamite® (Rockwood) erhältlich.

Das Anionen-getauschte Schichtmineral **DE1a** wird hierbei erhalten aus einem Schichtmineral **DE1",** bei welchem zumindest ein Teil der Anionen durch organische Anionen ausgetauscht worden sind. Ein Beispiel für ein derartig Anionen-getauschtes Schichtmineral **DE1a** ist ein Hydrotalcit **DE1",** bei dem zumindest ein Teil der Carbonat-Anionen der Zwischenschichten durch organische Anionen ausgetauscht wurden.
Es ist durchaus auch möglich, dass die hitzehärtende Epoxidharzzusammensetzung gleichzeitig ein Kationen-getauschtes Schichtmineral **DE1c** und ein Anionen-getauschtes Schichtmineral **DE1a** enthält.

In einer weiteren Ausführungsform ist der Zähigkeitsverbesserer **D** ein fester Zähigkeitsverbesserer, welcher ein Blockcopolymer **DE2** ist. Das Blockcopolymer **DE2** wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.
Besonders bevorzugte Blockcopolymere **DE2** sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

In einer weiteren Ausführungsform ist der Zähigkeitsverbesserer **D** ein Core-Shell Polymer **DE3.** Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensionspolymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351™ von Zeon erhältlich sind.
Besonders bevorzugt sind Core-Shell Polymerpartikel, die allenfalls in Suspension vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas oder Kane ACE MX-120 von Kaneka.
Weitere vergleichbare Beispiele für Core-Shell-Polymere werden unter dem Namen Albidur^{™} von Nanoresins AG, Deutschland, angeboten.
Ebenso geeignet sind nanoskalige Silikate in Epoxid-Matrix, wie sie unter dem Handelnamen Nanopox von Nanoresins AG, Deutschland, angeboten werden.
In einer weiteren Ausführungsform ist der Zähigkeitsverbesserer **D** ein Umsetzungsprodukt **DE4** eines carboxylierten festen Nitrilkautschuks mit überschüssigem Epoxidharz.

In einer weiteren Ausführungsform ist der Zähigkeitsverbesserer **D** ein blockiertes Polyurethanpolymer der Formel (IV).

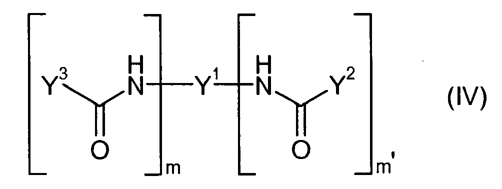

Hierbei stehen m und m' je für Werte zwischen 0 und 8, mit der Massgabe, dass m + m' für einen Wert von 1 bis 8 steht.
Bevorzugt ist m verschieden von 0.
Weiterhin steht Y¹ für ein mit m+m' Isocyanatgruppen terminiertes lineares oder verzweigtes Polyurethanpolymer **PU1** nach dem Entfernen aller endständigen Isocyanatgruppen.
Y² steht unabhängig von einander für eine Blockierungsgruppe, welche sich bei einer Temperatur über 100°C abspaltet.
Y³ steht unabhängig von einander für eine Gruppe der Formel (IV').

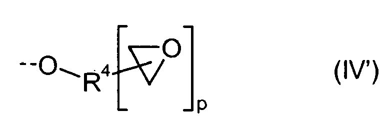

Hierbei steht R⁴ seinerseits für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen und p steht für die Werte 1, 2 oder 3.
Unter einem "araliphatischen Rest" versteht man in diesem Dokument eine Aralkylgruppe, d.h. durch eine durch Arylgruppen substituierte Alkylgruppe (vgl. Römpp, CD Römpp Chemie Lexikon, Version 1, Stuttgart/New York, Georg Thieme Verlag 1995).

Y² steht insbesondere unabhängig voneinander für einen Substituenten, welcher ausgewählt ist aus der Gruppe bestehend aus

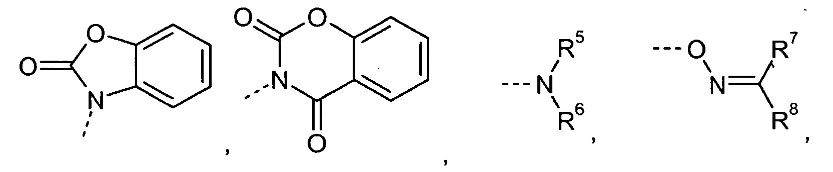

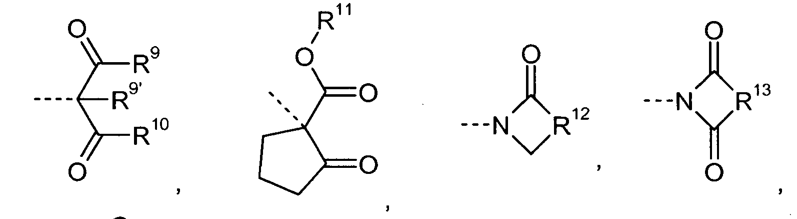

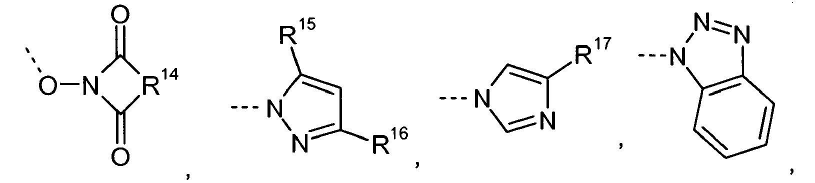

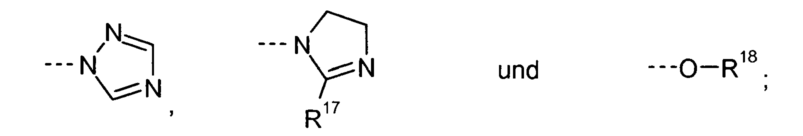

Hierbei stehen R⁵, R⁶, R⁷ und R⁸ je unabhängig voneinander für eine Alkyl- oder Cycloalkyl- oder Aralkyl- oder Arylalkyl-Gruppe oder aber R⁵ bildet zusammen mit R⁶, oder R⁷ zusammen mit R⁸, einen Teil eines 4- bis 7-gliedrigen Rings, welcher allenfalls substituiert ist.
Weiterhin steht R⁹, R^{9'} und R¹⁰ je unabhängig voneinander für eine Alkyl- oder Aralkyl- oder Arylalkyl-Gruppe oder für eine Alkyloxy- oder Aryloxy-oder Aralkyloxy-Gruppe und R¹¹ für eine Alkylgruppe.
R¹², R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe und R¹⁵, R¹⁶ und R¹⁷ stehen je unabhängig voneinander für H oder für eine Alkylgruppe oder für eine Arylgruppe oder eine Aralkylgruppe.
Schliesslich steht R¹⁸ für eine Aralkylgruppe oder für eine ein- oder mehrkernige substituierte oder unsubstituierte Aromatengruppe, welche gegebenenfalls aromatische Hydroxylgruppen aufweist.
Als R¹⁸ sind insbesondere einerseits Phenole oder Bisphenole nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A.
Als R¹⁸ sind andererseits insbesondere Hydroxybenzylalkohol und Benzylalkohol nach Entfernung einer Hydroxylgruppe zu betrachten.
Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.
Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.
Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.
Besonders bevorzugte Reste Y² sind Reste, welche ausgewählt sind aus der Gruppe bestehend aus

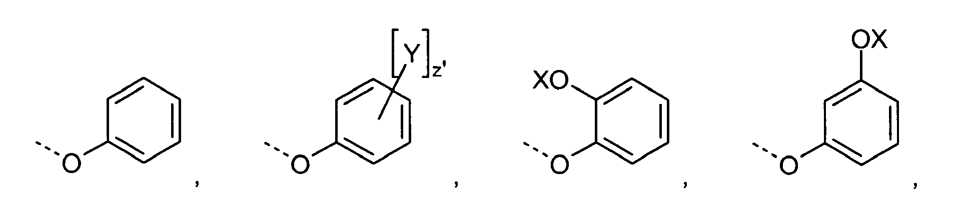

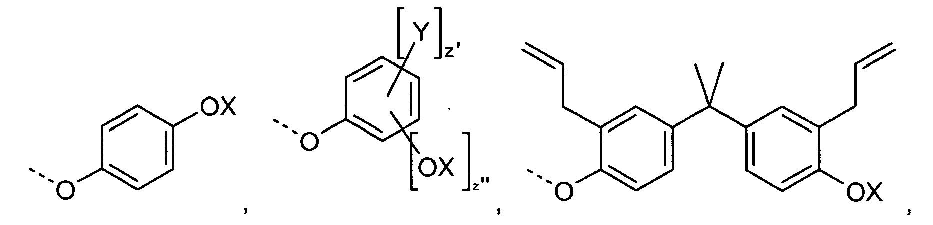

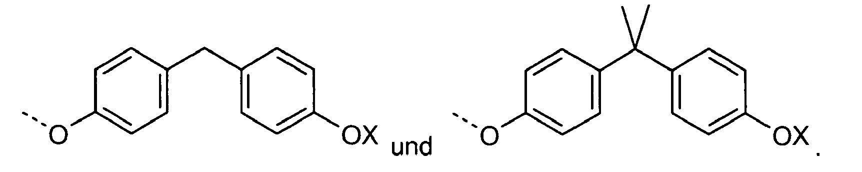

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter C₁₅-Alkylrest mit 1 bis 3 Doppelbindungen bevorzugt.
Der Rest X steht für H oder für einen Alkyl-, Aryl-, Aralkylgruppe, insbesondere für H oder Methyl.
Die Indices z' und z" stehen für die Werte 0, 1, 2, 3, 4 oder 5, mit der Massgabe, dass die Summe z' + z" für einen Wert zwischen 1 und 5 steht.

Die Herstellung des blockierten Polyurethanpolymers der Formel (IV) erfolgt aus dem Isocyanatgruppen terminierten linearen oder verzweigten Polyurethanpolymeren **PU1** mit einer oder mehreren Isocyanat-reaktiven Verbindungen Y²H und oder Y³H. Falls mehrere derartige Isocyanat-reaktive Verbindungen eingesetzt werden, kann die Reaktion sequentiell oder mit einer Mischung dieser Verbindungen erfolgen.
Die Umsetzung erfolgt derart, dass die eine oder die mehreren Isocyanat-reaktiven Verbindungen Y²H und/oder Y³H stöchiometrisch oder im stöchiometrischen Überschuss eingesetzt werden, um zu gewährleisten, dass alle NCO-Gruppen umgesetzt sind.

Die Isocyanat-reaktive Verbindung Y³H ist eine Monohydroxyl-Epoxidverbindung der Formel (IVa).

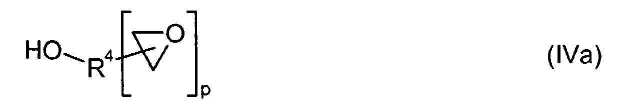

Falls mehrere derartige Monohydroxyl-Epoxidverbindungen eingesetzt werden, kann die Reaktion sequentiell erfolgen oder mit einer Mischung dieser Verbindungen erfolgen.
Die Monohydroxyl-Epoxidverbindung der Formel (IVa) weist 1, 2 oder 3 Epoxidgruppen auf. Die Hydroxylgruppe dieser Monohydroxyl-Epoxidverbindung (IVa) kann eine primäre oder eine sekundäre Hydroxylgruppe darstellen.
Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.
Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IVb), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IVb), die bei der Reaktion von Bisphenol-F (R = H) oder des Gemisches von Bisphenol-A und Bisphenol-F mit Epichlorhydrin gebildet werden.

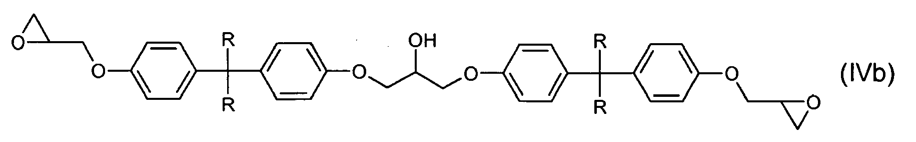

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sekundären Aminen, eingesetzt werden.

Der Rest R⁴ ist insbesondere bevorzugt ein dreiwertiger Rest der Formel 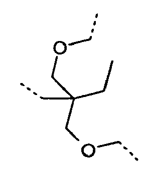 oder 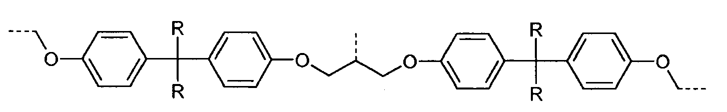 wobei R für Methyl oder H steht.
Die freie primäre oder sekundäre OH-Funktionalität der Monohydroxyl-Epoxidverbindung der Formel (IVa) lässt eine effiziente Umsetzung mit terminalen Isocyanatgruppen von Polymeren zu, ohne dafür unverhältnismässige Überschüsse der Epoxidkomponente einsetzen zu müssen.

Das Polyurethanpolymer **PU1,** auf dem Y¹ basiert, lässt sich aus mindestens einem Diisocyanat oder Triisocyanat sowie aus mindestens einem Polymeren **Q_{PM}** mit endständigen Amino-, Thiol- oder Hydroxylgruppen und / oder aus einem, gegebenenfalls substituierten, Polyphenol **Q_{PP}** herstellen.

Geeignete Diisocyanate sind beispielsweise aliphatische, cycloaliphatische, aromatische oder araliphatische Diisocyanate, insbesondere handelsübliche Produkte wie Methylendiphenyldiisocyanat (MDI), 1,4-Butandiisocyanat, Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI) oder m-Tetramethylxylylen diisocyanat (TMXDI) sowie deren Dimere. Bevorzugt sind HDI, IPDI, MDI oder TDI.
Geeignete Triisocyanate sind beispielsweise Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.
Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere Polymere **Q_{PM}** mit zwei oder drei endständigen Amino-, Thiol- oder Hydroxylgruppen geeignet.
Als derartige geeignete Polymere **Q_{PM}** gelten insbesondere diejenigen, wie sie beispielsweise in WO 2008/049857 A1, insbesondere als **Q_{PM}** auf Seite 7, Zeile 25 bis Seite 11, Zeile 20, deren Inhalt hiermit insbesondere durch Bezugnahme eingeschlossen wird, offenbart sind.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** eignen sich insbesondere Polyoxyalkylenpolyole, auch Polyetherpolyole genannt, Hydroxyterminierte Polybutadienpolyole, Styrol-Acrylnitril gepfropfte Polyetherpolyole, Polyhydroxyterminierte Acrylnitril/Butadien-Copolymere, Polyesterpolyole sowie Polycarbonatpolyole.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.
Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol- oder Kresolnovolacke mit -OH-Funktionalität von 2.0 bis 3.5 sowie alle Isomeren der vorgenannten Verbindungen.

Besonders geeignet als in der hitzehärtende Epoxidharzzusammensetzung gegebenenfalls vorhandenem Zähigkeitsverbesserer **D** sind Zähigkeitsverbesserer, welche ein Hydroxylgruppe(n) aufweisendes amphiphiles Blockcopolymer darstellen, wie sie unter dem Handelsnamen Fortegra™ , insbesondere Fortegra™ 100, von Dow Chemical, vertrieben werden, bzw. deren Umsetzungsprodukte mit Polyisocyanaten und gegebenenfalls weiteren Isocyanatreaktiven Verbindungen.

Besonders geeignet als in der hitzehärtende Epoxidharzzusammensetzung gegebenenfalls vorhandenem Zähigkeitsverbesserer **D** sind jene, wie sie in den folgenden Artikel bzw. Patentschriften, deren Inhalt hiermit durch Referenz mit eingeschlossen wird, offenbart sind: EP 0 308 664 A1, insbesondere Formel (I), besonders Seite 5, Zeile 14 bis Seite 13, Zeile 24; EP 0 338 985 A1, EP 0 353 190 A1, WO 00/20483 A1, insbesondere Formel (I), besonders Seite 8, Zeile 18 bis Seite 12, Zeile 2; WO 01/94492 A1, insbesondere die als D) und E) bezeichneten Reaktionsprodukte, besonders Seite 10, Zeile 15 bis Seite 14, Zeile 22; WO 03/078163 A1, insbesondere das als B) bezeichnete Acrylatterminierte Polyurethanharz, besonders Seite 14, Zeile 6 bis Seite 14, Zeile 35; WO 2005/007766 A1, insbesondere Formel (I) oder (II), besonders Seite 4, Zeile 5 bis Seite 11, Zeile 20; EP 1 728 825 A1, insbesondere Formel (I), besonders Seite 3, Zeile 21 bis Seite 4, Zeile 47; WO 2006/052726 A1, insbesondere das als b) bezeichnete amphiphilic block copolymer, besonders Seite 6, Zeile 17 bis Seite 9, Zeile 10; WO 2006/052729 A1, insbesondere das als b) bezeichnete amphiphilic block copolymer, besonders Seite 6, Zeile 25 bis Seite 10, Zeile 2; T.J. Hermel-Davidock et al., J.Polym. Sci. Part B: Polym. Phys. 2007, 45, 3338-3348, insbesondere die amphiphilen Blockcopolymere, besonders Seite 3339, 2. Spalte bis 3341 2.Spalte; WO 2004/055092 A1, insbesondere Formel (I), besonders Seite 7, Zeile 28 bis Seite 13, Zeile 15;. WO 2005/007720 A1, insbesondere Formel (I), besonders Seite 8, Zeile 1 bis Seite 17, Zeile 10; WO 2007/020266 A1, insbesondere Formel (I), besonders Seite 3, Zeile 1 bis Seite 11, Zeile 6, WO 2008/049857 A1, insbesondere Formel (I), besonders Seite 3, Zeile 5 bis Seite 6, Zeile 20, WO 2008/049858 A1, insbesondere Formel (I) und (II) , besonders Seite 6, Zeile 1 bis Seite 12, Zeile 15, WO 2008/049859 A1, insbesondere Formel (I), besonders Seite 6, Zeile 1 bis Seite 11, Zeile 10, WO 2008/049860 A1, insbesondere Formel (I), besonders Seite 3, Zeile 1 bis Seite 9, Zeile 6, sowie DE-A-2 123 033, US 2008/0076886 A1, WO 2008/016889 und WO 2007/025007.

Es hat sich gezeigt, dass in der hitzehärtenden Epoxidharzzusammensetzung vorteilhaft mehrere Zähigkeitsverbesserer vorhanden sind, insbesondere auch mehrere Zähigkeitsverbesserer **D.**

Der Anteil an Zähigkeitsverbesserer **D** wird vorteilhaft in einer Menge von 0.1 - 50 Gew.-%, insbesondere 0.5 - 35 Gew.-%, bevorzugt 1 - 20 Gew.- %, bezogen auf das Gewicht der hitzehärtenden Epoxidharzzusammensetzung, eingesetzt.

In einer weiteren bevorzugten Ausführungsform enthält die hitzehärtende Epoxidharzzusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.
Ein weiteres Beispiel sind funktionalisierte Alumoxane, wie z. B. in US 6,322,890 beschrieben.
Vorteilhaft beträgt der Gesamtanteil des gesamten Füllstoffs **F** 3 - 50 Gewichts-%, vorzugsweise 5 - 35 Gewichts-%, insbesondere 5 - 25 Gewichts- %, bezogen auf das Gewicht der gesamten hitzehärtende Epoxidharzzusammensetzung.

In einer weiteren bevorzugten Ausführungsform enthält die hitzehärtende Epoxidharzzusammensetzung ein physikalisches oder chemisches Treibmittel, wie es beispielsweise unter dem Handelsnamen Expancel™ der Firma Akzo Nobel oder Celogen™ der Firma Chemtura oder unter dem Handelsnamen Luvopor® von Lehmann & Voss erhältlich ist. Der Anteil des Treibmittels beträgt vorteilhaft 0.1 - 3 Gew.-%, bezogen auf das Gewicht der hitzehärtenden Epoxidharzzusammensetzung.

In einer weiteren bevorzugten Ausführungsform enthält die hitzehärtende Epoxidharzzusammensetzung zusätzlich mindestens einen Epoxidgruppen-tragenden Reaktivverdünner **G.** Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂ - C₃₀ - Alkolen, insbesondere ausgewählt aus der Gruppe bestehend aus Ethylenglykol-, Butandiol-, Hexandiol-, Oktandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen insbesondere ausgewählt aus der Gruppe bestehend aus Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin und Triglycdiyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäure-glycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycol-diglycidylether oder Polypropyleneglycol-diglycidylether.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Anteil an epoxidgruppentragenden Reaktivverdünner **G** 0.1 - 20 Gew.-%, bezogen auf das Gewicht der hitzehärtenden Epoxidharzzusammensetzung.

Die hitzehärtende Epoxidharzzusammensetzung kann weiterhin ein Thixotropiermittel **H** auf Basis eines Harnstoffderivates enthalten. Das Harnstoffderivat ist insbesondere ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenyl-methylen-diisocyanat (MDI) mit Butylamin erwiesen.
Das Harnstoffderivat ist vorzugsweise in einem Trägermaterial vorhanden. Das Trägermaterial kann ein Weichmacher, insbesondere ein Phthalat oder ein Adipat sein, vorzugsweise ein Diisodecylphthalat (DIDP) oder Dioctyladipat (DOA). Das Trägermittel kann auch ein nicht-diffundierendes Trägermittel sein. Dies ist bevorzugt, um möglichst eine geringe Migration nach Aushärtung von nicht regierten Bestandteilen zu gewährleisten. Bevorzugt sind als nicht-diffundierende Trägermittel blockierte Polyurethanprepolymere.
Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanprepolymer, insbesondere erhalten durch Umsetzung eines trifunktionellen Polyetherpolyols mit IPDI und anschliessender Blockierung der endständigen Isocyanatgruppen mit ε-Caprolactam.
Vorteilhaft beträgt der Gesamtanteil des Thixotropiermittels **H** 0 - 40 Gewichts-%, vorzugsweise 5 - 25 % Gewichts-%, bezogen auf das Gewicht der gesamten hitzehärtenden Epoxidharzzusammensetzung. Das Verhältnis vom Gewicht des Harnstoffderivates zum Gewicht des allenfalls vorhandenen Trägermittels beträgt vorzugsweise 2 / 98 bis 50 / 50, insbesondere 5 / 95 - 25 /75.

Die hitzehärtende Epoxidharzzusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie BHT oder Wingstay® T (Elikem), sterisch gehinderte Amine oder N-Oxylverbindungen wie TEMPO (Evonik).

In einem weiteren Aspekt betrifft die vorliegende Erfindung eine zweikomponentige Epoxidharzzusammensetzung bestehend aus einer Harzkomponente **K1** und einer Härterkomponente **K2,** wobei
- die Harzkomponente **K1** mindestens ein Epoxidharz **EH** mit durchschnittlich mehr als einer Epoxidgruppe pro Molekül sowie mindestens eine Verbindung der Formel (I); und wobei
- die Härterkomponente **K2** mindestens ein Polyamin **B2** und/oder Polymercaptan **B3** umfasst.

Das Epoxidharz **EH** mit durchschnittlich mehr als einer Epoxidgruppe pro Molekül sowie die Verbindung der Formel (I) wurden vorgehend schon detailliert beschrieben.

Das Polyamin **B2** ist insbesondere ein Polyamin mit mindestens zwei Aminogruppen in Form von primären oder sekundären Aminogruppen.

Als Polyamin **B2** sind insbesondere die folgenden Polyamine geeignet:
- aliphatische, cycloaliphatische oder arylaliphatische Diamine, beispielsweise Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3-und 1,4-Diaminocyclohexan, Bis-(4-aminocyclohexyl)-methan (H₁₂-MDA), Bis-(4-amino-3-methylcyclohexyl)-methan, Bis-(4-amino-3-ethylcyclohexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)-cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 1,4-Diamino-2,2,6-trimethylcyclohexan (TMCDA), 1,8-Menthandiamin, 3,9-Bis-(3-aminopropyl)-2,4,8,10-tetraoxaspiro[5.5]undecan sowie 1,3- und 1,4-Xylylendiamin;
- Ethergruppen-haltige aliphatische Diamine, beispielsweise Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin und höhere Oligomere dieser Diamine, Bis-(3-aminopropyl)polytetrahydrofurane und andere Polytetrahydrofuran-diamine mit Molekulargewichten im Bereich von beispielsweise 350 bis 5200, sowie Polyoxyalkylen-Diamine. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} D-2000, Jeffamine^{®} D-4000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; Polyetheramin D 230, Polyetheramin D 400 und Polyetheramin D 2000, PC Amine^{®} DA 250, PC Amine^{®} DA 400, PC Amine^{®} DA 650 und PC Amine^{®} DA 2000;
- aliphatische, cycloaliphatische oder arylaliphatische Triamine wie 4-Aminomethyl-1,8-octandiamin, 1,3,5-Tris-(aminomethyl)-benzol, 1,3,5-Tris-(aminomethyl)-cyclohexan, Tris-(2-aminoethyl)-amin, Tris-(2-aminopropyl)-amin, Tris-(3-aminopropyl)-amin;
- Polyoxyalkylen-Triamine, welche typischerweise Produkte aus der Aminierung von Polyoxyalkylen-Triolen darstellen und beispielsweise erhältlich sind unter dem Handelsnamen Jeffamine^{®} (von Huntsman), unter dem Namen Polyetheramin (von BASF) oder unter dem Namen PC Amine^{®} (von Nitroil), wie zum Beispiel Jeffamine^{®} T-403, Jeffamine^{®} T-3000, Jeffamine^{®} T-5000; Polyetheramin T403, Polyetheramin T5000; und PC Amine^{®} TA 403, PC Amine^{®} TA 5000;
- sekundäre und primäre Aminogruppen aufweisende Polyamine, beispielswiese Diethylentriamin (DETA), Dipropylentriamin (DPTA), Bis-hexamethylentriamin (BHMT), 3-(2-Aminoethyl)aminopropylamin, N3-(3-Aminopentyl)-1,3-pentandiamin, N5-(3-Aminopropyl)-2-methyl-1,5-pentandiamin, N5-(3-Amino-1-ethylpropyl)-2-methyl-1,5-pentandiamin; sowie weiterhin die als geeignete Polyamine **B1** bereits genannten Polyamine;
- tertiäre Aminogruppen aufweisende Polyamine, wie beispielsweise N,N'-Bis-(aminopropyl)-piperazin, N,N-Bis-(3-aminopropyl)methylamin, N,N-Bis-(3-aminopropyl)ethylamin, N,N-Bis-(3-aminopropyl)propylamin N,N-Bis-(3-aminopropyl)cyclohexylamin, N,N-Bis-(3-aminopropyl)-2-ethyl-hexylamin, sowie die Produkte aus der doppelten Cyanoethylierung und nachfolgender Reduktion von Fettaminen, welche abgeleitet sind von natürlichen Fettsäuren, wie N,N-Bis-(3-aminopropyl)-dodecylamin und N,N-Bis-(3-aminopropyl)-talgalkylamin, erhältlich als Triameen^{®} Y12D und Triameen^{®} YT (von Akzo Nobel);
- sekundäre Aminogruppen aufweisende Polyamine, wie beispielsweise N,N'-Dibutylethylendiamin; N,N'-Di-tert.butyl-ethylendiamin, N,N'-Diethyl-1,6-hexandiamin, 1-(1-Methylethyl-amino)-3-(1-methylethyl-aminomethyl)-3,5,5-trimethylcyclohexan (Jefflink^{®} 754 von Huntsman), N4-Cyclohexyl-2-methyl-N2-(2-methylpropyl)-2,4-pentandiamin, N,N'-Dialkyl-1,3-xylylendiamin, Bis-(4-(N-alkylamino)-cyclohexyl)-methan, 4,4'-Trimethylen-dipiperidin, N-alkylierte Polyetheramine, beispielsweise die Jeffamine^{®}-Typen SD-231, SD-401, SD-404 und SD-2001 (von Huntsman); -
- weiterhin sogenannte Polyamidoamine. Als Polyamidoamin wird das Reaktionsprodukt aus einer ein- oder mehrwertigen Carbonsäure, beziehungsweise deren Ester oder Anhydride, und einem aliphatischen, cycloaliphatischen oder aromatischen Polyamin bezeichnet, wobei das Polyamin im stöchiometrischen Überschuss eingesetzt wird. Als mehrwertige Carbonsäure wird üblicherweise eine sogenannte Dimerfettsäure verwendet, und als Polyamin wird üblicherweise ein Polyalkylenamin wie beispielsweise TETA verwendet. Kommerziell erhältliche Polyamidoamine sind beispielsweise Versamid^{®} 100, 125, 140 und 150 (von Cognis), Aradur 223, 250 und 848 (von Huntsman), Euretek^{®} 3607, Euretek 530^{®} (von Huntsman), Beckopox^{®} EH 651, EH 654, EH 655, EH 661 und EH 663 (von Cytec).

Bevorzugt ist das Polyamin **B2** ausgewählt aus der Gruppe bestehend aus 1,5-Diamino-2-methylpentan (MPMD), 2-Butyl-2-ethyl-1,5-pentandiamin (C11-Neodiamin), 2,2,4- und 2,4,4-Trimethylhexamethylendiamin (TMD), Bis-(4-amino-3-methylcyclohexyl)-methan, 1-Amino-3-aminomethyl-3,5,5-trimethylcyclohexan (= Isophorondiamin oder IPDA), 1,3-Bis-(aminomethyl)cyclohexan, 3(4),8(9)-Bis-(aminomethyl)-tricyclo[5.2.1.0^{2,6}]decan, 1,3-Xylylendiamin, Diethylentriamin (DETA), Dipropylentriamin (DPTA) und ein Ethergruppenhaltiges Diamin aus der Aminierung eines Polyoxyalkylen-Diols mit einem Molekulargewicht von 500 bis 5000 g/mol, insbesondere Jeffamine^{®} D-230 und Jeffamine^{®} D-400.

Als Polymercaptan **B3** sind insbesondere Dimercaptane bevorzugt. Geeignete Polymercaptane **B3** sind beispielsweise Polymercaptocetate von Polyolen. Es handelt sich hierbei insbesondere um Polymercaptocetate der folgenden Polyolen:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind.
- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von Elastogran unter dem Namen Lupranol® geliefert werden;
- Polyesterpolyole, hergestellt beispielsweise aus zwei- bis dreiwertigen Alkoholen mit organischen Dicarbonsäuren oder deren Anhydriden oder Estern, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind;
- 1,2-Ethandiol, Diethylenglykol, 1,2-Propandiol, Dipropylenglykol, 1,4-Butandiol, 1,5-Pentandiol, 1,6-Hexandiol, 1,7-Hepandiol, Octandiol, Nonandiol, Decandiol, Neopentylglykol, sowie Polyole wie sie als Polyole **A1** genannt sind;
- Polyole, wie sie durch Reduktion von dimerisierten Fettsäuren enthalten werden.

Insbesondere bevorzugt sind Glycol-dimercaptoacetat, Trimethylolpropan-trimercaptoacetat und Butandiol-dimercaptoacetat.

Als meist bevorzugte Polymercaptane gelten Dimercaptane der Formel (V").

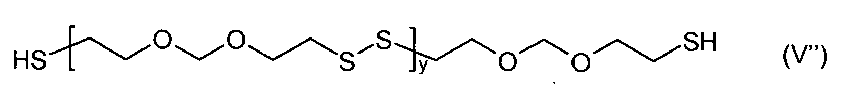

Hierbei steht y für einen Wert von 1 bis 45, insbesondere von 5 bis 23. Die bevorzugten Molekulargewichte sind zwischen 800 und 7500 g/mol, insbesondere zwischen 1000 und 4000 g/mol,.

Derartige Polymercaptane sind kommerziell erhältlich unter der Thiokol® LP-Reihe von Toray Fine Chemicals Co.

Es können auch Mischungen von verschiedenen Polyaminen **B2** und/oder Polymercaptanen **B3** in der Härterkomponente **K2** eingesetzt werden.

Die zweikomponentige Epoxidharzzusammensetzung enthält weiterhin gegebenenfalls mindestens einen Zähigkeitsverbesserer **D,** mindestens einen Füllstoff **F,** mindestens einen Reaktivverdünner **G** und/oder mindestens ein Thixotropiermittel **H,** wie sie vorhergehend bei den hitzehärtenden Epoxidharzzusammensetzungen bereits beschrieben sind. Dem Fachmann ist dabei selbstverständlich klar, dass innerhalb einer Komponente keine Bestandteile vorhanden sein sollen, welche miteinander reagieren und dadurch negative Auswirkungen auf die Lagerstabilität der zweikomponentigen Epoxidharzzusammensetzung haben könnten.
Vorteilhafte Anteile an den erwähnten weiteren Bestandteile der zweikomponentigen Epoxidharzzusammensetzungen entsprechen den vorhergehend als vorteilhaft für die hitzehärtenden Epoxidharzzusammensetzungen erwähnten Anteile.

Die Verbindung der Formel (I) eignet sich ausgezeichnet als Haftvermittler und kann breit eingesetzt werden. Darum betrifft ein weiterer Aspekt der vorliegenden Erfindung die Verwendung einer Verbindung der Formel (I) wie vorhergehend erwähnt als Haftvermittler für ein Substrat **S1.**
Bevorzugte Substrate **S1** sind beöltes Metall oder eine beölte Metalllegierung.
Bevorzugt wird die Verbindung der Formel (I) als Haftvermittler in Klebstoffen und Beschichtungen, insbesondere bevorzugt in Klebstoffen eingesetzt.
Die bessere Haftvermittlung tritt dadurch zu Tage, dass der Zusatz einer Verbindung der Formel (I) zu einer Epoxidharzzusammensetzung zu bedeutend höheren T-Peel Werten führt, als bei entsprechenden hitzehärtenden Epoxidharzzusammensetzung ohne Verbindungen der Formel (I).
Ein weiterer Vorteil derartiger Verbindungen ist, dass sie dank ihrer Epoxidgruppen bei Verwendung in einem hitzehärtenden Expoxidharzklebstoff während der Aushärtung in den Klebstoff eingebaut werden. Des Weiteren hat sich gezeigt, dass die Verbindung der Formel (I) die Aushärtung des Klebstoffs nicht behindern und eine gute Auswaschbeständigkeit aufweisen.
Es ist möglich, flüssige Verbindung der Formel (I) herzustellen, wodurch die Verbindungen leicht dosiert und eingearbeitet werden können und auf den Einsatz von Lösungsmitteln weitgehend verzichtet werden kann.
Weiterhin zeigen derartige Verbindungen eine äusserst gute Benetzbarkeit des Substrats, was eine notwendige Voraussetzung zu deren Verwendung als Haftvermittler darstellt.

Die Verbindungen der Formel (I) können auch als Primer oder als Primerbestandteil eingesetzt werden. Unter einem Primer wird ein Voranstrich verstanden, welcher auf eine Oberfläche appliziert wird und nach einer gewissen Wartezeit nach der Applikation, der so genannten Ablüftezeit von einem Kleb- oder Dichtstoff oder einer Beschichtung überdeckt wird und dazu dient die Haftung eines darauf applizierten Klebstoffs oder Dichtstoffs oder Beschichtung auf der betreffenden Substratoberfläche zu verbessern.
Die Verbindung der Formel (I) eignet sich darum zur Verwendung als Haftvoranstrich für ein Substrat **S1,** insbesondere handelt es sich bei dem Substrat **S1** um beöltes Metall oder eine beölte Metalllegierung, insbesondere beöltes verzinktes Metall beziehungsweise Metalllegierung.
Von Vorteil ist, dass die Verbindung der Formel (I) farbig sein kann, was den Nachweis der Verbindung gemäss Anspruch 1 nach ihrer Applikation erleichtert.

In einem weiteren Aspekt betrifft die vorliegende Erfindung eine Verwendung einer hitzehärtenden Epoxidharzzusammensetzung, wie sie vorgehend erwähnt wurde, oder einer zweikomponentigen Epoxidharzzusammensetzung, wie sie vorgehend erwähnt wurde, als Klebstoff.

Es hat sich gezeigt, dass sich die beschriebenen hitzehärtenden Epoxidharzzusammensetzungen besonders zur Verwendung als einkomponentige hitzehärtende Klebstoffe, insbesondere als hitzehärtender einkomponentiger Rohbauklebstoff im Fahrzeugbau, eignen. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit, sowohl bei höheren Temperaturen und vor allem bei tiefen Temperaturen, insbesondere zwischen 0°C bis -40°C auszeichnen. Solche Klebstoffe werden für das Verkleben von hitzestabilen Materialien benötigt. Unter hitzestabilen Materialien werden Materialien verstanden, welche bei einer Aushärtetemperatur von 100 - 220 °C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Die vorgängig beschriebenen zweikomponentigen Epoxidharzzusammensetzungen können verwendet werden als Klebstoff, Haftvermittler, Abdichtungsmasse, Vergussmasse, Beschichtung, Bodenbelag, Anstrich, Lack, Primer oder Grundierung, wobei Eigenschaften wie Wasserdichtigkeit, Korrosionsschutz, Chemikalienbeständigkeit und/oder hohe Härte und Zähigkeit im Vordergrund stehen können. Es hat sich gezeigt, dass sich die beschriebenen zweikomponentigen Epoxidharzzusammensetzungen besonders zur Verwendung als Klebstoff und/oder als Haftvermittler eignen. Ihre Verwendung kann beispielsweise im Hoch- oder Tiefbau, in der Fertigung oder Reparatur von industriellen Gütern oder Konsumgütern, insbesondere von Fahrzeugen, erfolgen.
Das Mischungsverhältnis zwischen der Härter-Komponente **K1** und der Harz-Komponente **K2** wird bevorzugt so gewählt, dass die gegenüber Epoxidgruppen reaktiven Gruppen der Härter-Komponente **K1** in einem geeigneten Verhältnis zu den Epoxidgruppen der Harz-Komponente **K2** stehen. Geeigneterweise sind vor der Aushärtung 0.7 bis 1.5, bevorzugt 0.9 bis 1.1, Equivalent gegenüber Epoxidgruppen aktive NH-Wasserstoffe pro Equivalent Epoxidgruppen vorhanden.
Das Gewichts-Mischungsverhältnis zwischen der Härter-Komponente **K1** und der Harz-Komponente **K2** liegt vorzugsweise im Bereich von 1:10 bis 10:1.
Bevorzugt haben beide Komponenten bei Raumtemperatur eine pastöse Konsistenz und weisen eine vergleichbare Viskosität auf.
Vor oder während der Applikation werden die beiden Komponenten mittels eines geeigneten Verfahrens miteinander vermischt. Das Mischen kann kontinuierlich oder batchweise erfolgen.

Der vorhergehend erwähnte hitzehärtende Epoxidharzzusammensetzung, beziehungsweise die vorhergehend erwähnte zweikomponentige Epoxidharzzusammensetzung, kann auf verschiedene Arten auf das Substrat aufgetragen werden. Neben der Applikation als Klebstoffraupe oder durch Aufsprühen ist auch eine Applikation als Film, gegebenenfalls auf einem Träger wie ein Netz möglich. Zusätzlich können die vorhergehend erwähnten Epoxidharzzusammensetzungen chemische und/oder physikalische Treibmittel enthalten, die während der Aushärtung zu einer Expansion führen.

Bevorzugte physikalische oder chemische Treibmittel sind beispielsweise unter dem Handelsnamen Expancel™ der Firma Akzo Nobel oder Celogen™ der Firma Chemtura oder unter dem Handelsnamen Luvopor® von Lehmann & Voss erhältlich. Der Anteil des Treibmittels beträgt vorteilhaft 0.1 - 3 Gew.-%, bezogen auf das Gewicht der erwähnten Epoxidharzzusammensetzung.

So betrifft in einem weiteren Aspekt die vorliegende Erfindung eine Verwendung einer hitzehärtenden Epoxidharzzusammensetzung, wie sie vorgehend erwähnt wurde oder einer zweikomponentigen Epoxidharzzusammensetzung, wie sie vorgehend erwähnt wurde, welche jeweils zusätzlich ein chemisches und/oder physikalisches Treibmittel enthält, als expandierender Klebstoff.

Einen weiteren Aspekt der vorliegenden Erfindung betrifft eine ausgehärtete Zusammensetzung einer hitzehärtenden oder einer zweikomponentigen Epoxidharzzusammensetzung.
Eine ausgehärtete Zusammensetzung einer hitzehärtenden Epoxidharzzusammensetzung wird erhalten durch Erhitzen und nachfolgendem Vernetzen einer hitzehärtenden Epoxidharzzusammensetzung. Das Erhitzen einer hitzehärtenden Epoxidharzzusammensetzung, wie sie vorgängig im Detail beschrieben wurde, erfolgt typischerweise in einem Ofen bei einer Temperatur von 100 - 220 °C, insbesondere von 120 - 200°C, bevorzugt von 130 - 190°C.

Eine ausgehärtete Zusammensetzung einer zweikomponentigen Epoxidharzzusammensetzung wird erhalten durch das Mischen der Harzkomponente **K1** und der Härterkomponente **K2** und nachfolgendem Vernetzen. Das Mischen einer zweikomponentigen Epoxidharzzusammensetzung, wie sie vorgängig beschrieben wurde, erfolgt typischerweise bei einer Temperatur von 5 - 80 °C, insbesondere von 10 - 70°C.

### Beispiele

**Tabelle 1: Verwendete Rohstoffe.**

| | |
|---|---|
| Trimethylolpropan-triglycidylether (Grilonit^{®} V 51-31) (= "***TGE***") | EMS-CHEMIE AG, Schweiz |
| Dimerisierte C18-Fettsäure (Pripol 1013) | Uniquema GmbH, Deutschland |
| Cardanol (Cardolite^{®} NC-700) (= "***NC***") | Cardolite Corporation, USA |
| Stearinsäure (= "***SA***") | Sigma-Aldrich Chemie GmbH, Schweiz |
| Bis(4-hydroxyphenyl)sulfon | Sigma-Aldrich Chemie GmbH, Schweiz |
| Bisphenol-A-diglycidylether (Araldite^{®} GY 250) (="***BADGE***") | Huntsman Advanced Materials GmbH, Schweiz |
| Polypropylenglycol-diglycidylether (ED-506) (="***ED-506***") | ADEKA Europe GmbH, Deutschland |
| Dicyandiamid (="***Dicy***") | Evonik Degussa GmbH, Deutschland |
| Polyetherpolyol (Desmophen 3060BS) | Bayer MaterialScience AG, Deutschland |
| Isophoron-diisocyanat (=IPDI) | Degussa-Hüls AG, Deutschland |
| Caprolactam | EMS Chemie, Schweiz |
| N-Butylamin | BASF SE, Deutschland |
| 4,4'-Diphenyl-methylen-diisocyanat (=MDI) | Bayer MaterialScience AG, Deutschland |
| Kern/Schale-Polymer (Zeon F-351) (="***F-351***") | Zeon Europe GmbH, Deutschland |
| Triphenylphosphin | Sigma-Aldrich Chemie GmbH, Schweiz |
| Dibutyl-Zinn-Dilaurat | Sigma-Aldrich Chemie GmbH, Schweiz |

### Herstellung Haftvermittler

100.0g (0.73 eq Epoxidgruppen) Trimethylolpropan-triglycidylether, 65.81g (219mmol) Cardolite^{®} NC-700, 20.77g (73mmol) Stearinsäure und 0.86g Triphenylphosphin als Katalysator wurden zusammengegeben. Der berechnete Gehalt an Epoxidgruppen beim Start der Reaktion war bei 3.90 eq/kg. Nach 6h Rühren bei 110°C unter Vakuum war der Epoxidgehalt auf ca. 2.5 eq/kg gesunken und blieb konstant, worauf die Reaktion abgebrochen wurde. Es wurde eine rote, viskose Lösung erhalten.
Es wurden verschiedene Verbindungen ***1* - *7*** entsprechend Formel (I) hergestellt. Für die Herstellung von ***7*** wurde ***BADGE*** anstelle von Trimethylolpropan-triglycidylether verwendet. ***Ref1*** entspricht einer nicht reagierten Mischung von Trimethylolpropan-triglycidylether, Cardolite^{®} NC-700 und Stearinsäure und ist somit nicht erfindungsgemäss. ***Ref2,*** beziehungsweise ***Ref3,*** sind Umsetzungsprodukte von Trimethylolpropan-triglycidylether mit ausschliesslich Stearinsäure, beziehungsweise ausschliesslich Cardolite^{®} NC-700, und sind somit nicht erfindungsgemäss.

**Tabelle 2: Herstellung der Verbindungen der Formel (I).**

| | ***1*** | ***2*** | ***3*** | ***4*** | ***5*** | ***6*** | ***7*** |
|---|---|---|---|---|---|---|---|
| ***BADGE*** | | | | | | | 0.540 |
| ***TGE*** | 0.730 | 0.730 | 0.730 | 0.730 | 0.730 | 0.730 | |
| ***SA*** | 0.044 | 0.073 | 0.102 | 0.146 | 0.061 | 0.082 | 0.054 |
| ***NC*** | 0.248 | 0.219 | 0.190 | 0.146 | 0.158 | 0.210 | 0.162 |
| ***SA*/*NC*** | 15/85 | 25/75 | 35/65 | 50/50 | 28/72 | 28/72 | 25/75 |
| ***Umsatz EP [%]*** | 40 | 40 | 40 | 40 | 30 | 40 | 40 |
| | | | | | | | |
| | ***Ref1*** | ***Ref2*** | ***Ref3*** | | | | |
| ***BADGE*** | | | | | | | |
| ***TGE*** | 0.730 | 0.730 | 0.730 | | | | |
| ***SA*** | 0.076 | 0.292 | - | | | | |
| ***NC*** | 0.194 | - | 0.292 | | | | |
| ***SA*/*NC*** | 28/72 | 100/0 | 0/100 | | | | |
| ***Umsatz EP [%]*** | 0 | 40 | 40 | | | | |

Der Anteil der Inhaltsstoffe ist in Tabelle 2 in Equivalenten Epoxidgruppen für die Polyglycidylether (Trimethylolpropan-triglycidylether, respektive ***BADGE***) oder in Equivalenten Phenolgruppen für Cardolite^{®} NC-700, beziehungsweise Carboxylgruppen für Stearinsäure, angegeben.
Das Verhältnis der Anteile in Equivalenten Carboxylgruppen von Stearinsäure zu Equivalenten Phenolgruppen von Cardolite^{®} NC-700 ("***SA*/*NC***") ist in Tabelle 2 ebenfalls ersichtlich.

Der berechnete Umsatz der Epoxidgruppen des eingesetzten Polyglycidylethers (Trimethylolpropan-triglycidylether, respektive ***BADGE***) bei der Herstellung von ***1 - 7***, sowie ***Ref1*** bis ***Ref3*** ("***Umsatz EP***") ist in Tabelle 2 in % angegeben. Er berechnet sich aus der Summe der Equivalente Phenolgruppen und Carboxylgruppen, geteilt durch die Equivalente Epoxidgruppen des eingesetzten Polyglycidylethers, multipliziert mit 100.

### Herstellung Zähigkeitsmodifikator/ Epoxidharzmischung ("Mod.Harz")

Bei 110°C wurden unter Vakuum und Rühren 123.9 g einer dimeren Fettsäure, 1.1 g Triphenylphosphin sowie 71.3 g Bis(4-hydroxyphenyl)sulfon mit 658 g eines flüssigen ***BADGE*** mit einem Epoxidgehalt von 5.45 eq/kg 5 Stunden lang umgesetzt, bis eine konstante Epoxidkonzentration von 2.82 eq/kg erreicht war. Nach dem Ende der Reaktion wurden dem Reaktionsgemisch zusätzlich 118.2 g flüssigen ***BADGE*** zugegeben.

### Herstellung blockiertes Polyurethanprepolymer

600.0 g eines Polyetherpolyols (Desmophen 3060BS; 3000 Dalton; OH-Zahl 57 mg/g KOH) wurde in Gegenwart von 0.08 g Dibutyl-Zinn-Dilaurat unter Vakuum und Rühren bei 90°C mit 140.0 g IPDI zum Isocyanatterminierten Prepolymer umgesetzt, bis der Isocyanatgehalt konstant blieb. Anschliessend wurden die freien Isocyanatgruppen mit Caprolactam (2% Überschuss) blockiert.

### Herstellung Harnstoffderivat-Paste ("HSD-Paste")

Unter Stickstoff und leichtem Wärmen wurden 68.7 g MDI-Flocken in 181.3 g des oben beschriebenen blockierten Polyurethanprepolymer eingeschmolzen. Danach wurden während zwei Stunden unter Stickstoff und schnellem Rühren 40.1 g N-Butylamin gelöst in 377.1 g des oben beschriebenen blockierten Prepolymers zugetropft. Nach Beendigung der Zugabe der Aminlösung wurde die weisse Paste für weitere 30 Minuten weitergerührt. So wurde nach dem Abkühlen eine weisse, weiche Paste erhalten, welche einen freien Isocyanatgehalt von < 0.1% aufwies.

### Herstellung Klebstoffzusammensetzung

Es wurden unterschiedliche Klebstoffzusammensetzung ***Z1*** - ***Z9*** sowie Vergleichszusammensetzungen ***ZRef1*** - ***ZRef3**,* bestehend aus den Inhaltsstoffen gemäss den Angaben in Gewichtsteilen in Tabelle 3, hergestellt.
Weiterhin wurde für jede Klebstoffzusammensetzung die **T-Peel Schälfestigkeit** ("*T-Peel*") in N/mm nach DIN 53282 bei einer Abzugsgeschwindigkeit von 10 mm/min mit Blechen (0.8 mm Dicke) aus beöltem feuerverzinkten Stahl bestimmt und in Tabelle 3 aufgeführt.

**Tabelle 3: Gewichtsangaben und T-Peel Wert Klebstoffzusammensetzungen.**

| | ***Z1*** | ***Z2*** | ***Z3*** | ***Z4*** | ***Z5*** | ***Z6*** | ***Z7*** |
|---|---|---|---|---|---|---|---|
| ***Mod.Harz*** | 53.6 | 53.6 | 53.6 | 53.6 | 53.6 | 53.6 | 53.6 |
| ***ED-506*** | 2.8 | 2.8 | 2.8 | 2.8 | 2.8 | 2.8 | 2.8 |
| ***1*** | 7.2 | | | | | | |
| ***2*** | | 7.2 | | | | | |
| ***3*** | | | 7.2 | | | | |
| ***4*** | | | | 7.2 | | | |
| ***5*** | | | | | 7.2 | | |
| ***6*** | | | | | | 7.2 | |
| ***7*** | | | | | | | 7.2 |
| ***HSD-Paste*** | 17.4 | 17.4 | 17.4 | 17.4 | 17.4 | 17.4 | 17.4 |
| ***Dicy*** | 3.0 | 3.0 | 3.0 | 3.0 | 3.0 | 3.0 | 3.0 |
| ***F-351*** | 6.7 | 6.7 | 6.7 | 6.7 | 6.7 | 6.7 | 6.7 |
| Füllstoffmischung | 16.5 | 16.5 | 16.5 | 16.5 | 16.5 | 16.5 | 16.5 |
| | | | | | | | |
| *T-Peel* [N/mm] | 8.8 | 10.8 | 10.6 | 9.6 | 9.0 | 10.6 | 8.9 |
| | | | | | | | |
| | ***Z8*** | ***Z9*** | ***ZRef1*** | ***ZRef2*** | ***ZRef3*** | | |
| ***Mod.Harz*** | 53.6 | 53.6 | 53.6 | 53.6 | 53.6 | | |
| ***ED-506*** | 2.8 | 2.8 | 2.8 | 2.8 | 2.8 | | |
| ***2*** | 5.2 | 2.7 | | | | | |
| ***Ref1*** | | | 7.2 | | | | |
| ***Ref2*** | | | | 3.6 | | | |
| ***Ref3*** | | | | 3.6 | 7.2 | | |
| ***HSD-Paste*** | 17.4 | 17.4 | 17.4 | 17.4 | 17.4 | | |
| ***Dicy*** | 3.0 | 3.0 | 3.0 | 3.0 | 3.0 | | |
| ***F-351*** | 6.7 | 6.7 | 6.7 | 6.7 | 6.7 | | |
| Füllstoffmischung | 16.5 | 16.5 | 16.5 | 16.5 | 16.5 | | |
| | | | | | | | |
| *T-Peel* [N/mm] | 11.0 | 7.6 | 7.2 | 8.1 | 6.0 | | |

Die Resultate aus Tabelle 3 zeigen, dass die Klebstoffzusammensetzungen ***Z1* - *Z9***, in welchen der eingesetzte Polyglycidylether (Trimethylolpropan-triglycidylether, respektive ***BADGE***) mit Cardolite^{®} NC-700 und Stearinsäure umgesetzt wurde, über einen besseren T-*Peel* Wert verfügen als ***ZRef1***, bei welcher der eingesetzte Polyglycidylether, Cardolite^{®} NC-700 und Stearinsäure in einer nicht reagierten Mischung zugegeben wurde.
Ausserdem ist aus Tabelle 3 ersichtlich, dass die Klebstoffzusammensetzungen ***Z1*** - ***Z7***, in welchen der eingesetzte Polyglycidylether (Trimethylolpropan-triglycidylether, respektive ***BADGE***) mit Cardolite^{®} NC-700 sowie Stearinsäure umgesetzt wurde, über einen besseren *T-Peel* Wert verfügen als die entsprechende Vergleichszusammensetzung ***ZRef2*,** welche eine gleiche Menge einer Mischung von Umsetzungsprodukten des Polyglycidylethers mit nur Stearinsäure, beziehungsweise nur Cardolite^{®} NC-700 enthält, oder als die entsprechende Vergleichszusammensetzung ***ZRef3*,** bei welcher die gleiche Menge der dem Haftvermittler entsprechenden Mischung eines Umsatzproduktes des Polyglycidylethers mit lediglich Cardolite^{®} NC-700, das heisst ohne Stearinsäure, umgesetzt wurde, enthält.

## Patentansprüche

1. Verbindung der Formel (I) 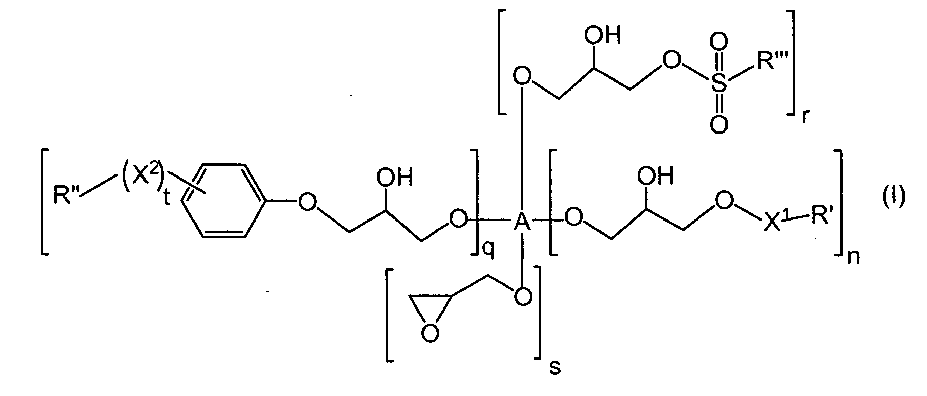 wobei
A für ein (n + q + r + s)-wertiges Polyol **A1** nach Entfernung der (n + q+ r + s) Hydroxylgruppen steht,
X¹ für 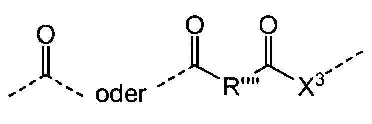 steht,
X² für 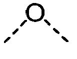 oder 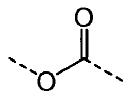 oder 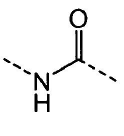 steht,
X³ für O oder NH steht,
R' für einen, allenfalls verzweigten, gesättigten oder ungesättigten Alkylrest mit 4 bis 30, insbesondere 6 bis 20 C-Atomen, steht,
R" für H oder einen, allenfalls verzweigten, gesättigten oder ungesättigten Alkylrest mit 1 bis 30, insbesondere 6 bis 20 C-Atomen, steht,
R"' für einen Alkylrest oder einen Alkylphenylrest mit 6 bis 30, insbesondere 6 bis 20 C-Atomen, steht,
R"" für einen aromatischen, cycloaliphatischen oder, allenfalls verzweigten, gesättigten oder ungesättigten aliphatischen zweiwertigen Rest mit 1 bis 10, insbesondere 2 bis 8 C-Atomen, steht,
t einen Wert von 0 oder 1, bevorzugt 0, aufweist,
n, q, r und s je Werte von 0 bis 5 aufweisen, mit der Massgabe, dass von den Werten n, q und r mindestens zwei verschieden von Null sind,
s insbesondere einen Wert von 1 oder 2, aufweist,
und
die Summe von (n + q + r + s) bevorzugt 3 oder 4 ist.

2. Verbindung gemäss Anspruch 1, **dadurch gekennzeichnet, dass** das Polyol **A1** ein aliphatisches, cycloaliphatisches oder aromatisches, insbesondere ein aliphatisches Polyol ist.

3. Verbindung gemäss Anspruch 1 oder 2, **dadurch gekennzeichnet, dass** das Polyol A1 ausgewählt ist aus der Gruppe bestehend aus Pentaerythrit (= 2,2-Bis-hydroxymethyl-1,3-propandiol), Dipentaerythrit (= 3-(3-Hydroxy-2,2-bis-hydroxymethyl-propoxy)-2,2-bis-hydroxymethyl-propan-1-ol), Glycerin (= 1,2,3-Propantriol), Trimethylolpropan (= 2-Ethyl-2-(hydroxymethyl)-1,3-propandiol), Trimethylolethan (= 2-(hydroxymethyl)-2-Methyl-1,3-propandiol), Di(trimethylolpropan) (= 2,2'-oxybis(methylen)bis(2-ethylpropan-1,3-diol)), Di(trimethylolethan) (= 2,2'-oxybis(methylen)bis(2-methylpropan-1,3-diol)), Diglycerin (= Bis-(2,3-dihydroxypropyl)-ether) und Triglycerin (= 1,3-Bis-(2,3-dihydroxypropyl)-2-propanol).

4. Hitzehärtende Epoxidharzzusammensetzung enthaltend
- mindestens ein Epoxidharz **EH** mit durchschnittlich mehr als einer Epoxidgruppe pro Molekül;
- mindestens einen Härter **B** für Epoxidharze, welcher durch erhöhte Temperatur aktiviert wird; sowie
- mindestens eine Verbindung der Formel (I) gemäss einem der Ansprüche 1 bis 3.

5. Hitzehärtende Epoxidharzzusammensetzung gemäss Anspruch 4, **dadurch gekennzeichnet, dass** der Gewichtsanteil an Verbindung der Formel (I) 0.001 - 20 Gew.-%, insbesondere 0.5 - 15 Gew.-%, bevorzugt 4 - 10 Gew.-%, bezogen auf das Gewicht der hitzehärtenden Epoxidharzzusammensetzung, beträgt.

6. Hitzehärtende Epoxidharzzusammensetzung gemäss einem der Ansprüche 4 oder 5, **dadurch gekennzeichnet, dass** der Gewichtsanteil an Epoxidharz **EH** 5 - 80 Gew.-%, insbesondere 10 - 75 Gew.-%, bevorzugt 15 - 70 Gew.-%, bezogen auf das Gewicht der hitzehärtenden Epoxidharzzusammensetzung, beträgt.

7. Hitzehärtende Epoxidharzzusammensetzung gemäss einem der Ansprüche 4 bis 6, **dadurch gekennzeichnet, dass** die hitzehärtende Epoxidharzzusammensetzung weiterhin einen Zähigkeitsverbesserer **D,** welcher ausgewählt ist aus der Gruppe bestehend aus blockierten Polyurethanpolymeren, Flüssigkautschuken, Epoxidharz-modifizierten Flüssigkautschuken, Blockcopolymeren und Core-Shell-Polymeren, insbesondere in einer Menge von 0.1 - 50 Gew.-%, insbesondere von 0.5 - 35 Gew.-%, bevorzugt von 1 - 20 Gew.-%, bezogen auf das Gewicht der hitzehärtenden Epoxidharzzusammensetzung, enthält.

8. Hitzehärtende Epoxidharzzusammensetzung gemäss einem der Ansprüche 4 bis 7, **dadurch gekennzeichnet, dass** die hitzehärtende Epoxidharzzusammensetzung weiterhin einen Zähigkeitsverbesserer **D** aus Flüssigkautschuk, welcher ein Acrylonitil/Butadien-Copolymer ist, welches mit Carboxylgruppen oder (Meth)acrylatgruppen oder Epoxidgruppen terminiert ist, oder ein Derivat davon ist, enthält.

9. Hitzehärtende Epoxidharzzusammensetzung gemäss einem der Ansprüche 4 bis 8, **dadurch gekennzeichnet, dass** die hitzehärtende Epoxidharzzusammensetzung weiterhin einen Zähigkeitsverbesserer **D,** welcher ein blockiertes Polyurethanpolymer der Formel (IV) ist, aufweist, 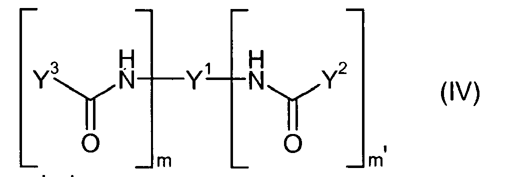 wobei
Y¹ für ein mit m+m' Isocyanatgruppen terminiertes lineares oder verzweigtes Polyurethanpolymer **PU1** nach dem Entfernen aller endständigen Isocyanatgruppen steht;
Y² unabhängig von einander für eine Blockierungsgruppe, welche sich bei einer Temperatur über 100°C abspaltet, steht;
Y³ unabhängig von einander für eine Gruppe der Formel (IV') steht 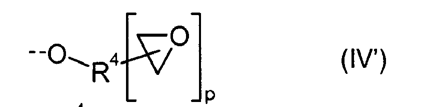 wobei R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;
p = 1, 2 oder 3 und
m und m' je für Werte zwischen 0 und 8 stehen, mit der Massgabe, dass m +m' für einen Wert von 1 bis 8 steht.

10. Hitzehärtende Epoxidharzzusammensetzung gemäss Anspruch 9, **dadurch gekennzeichnet, dass** Y² für einen Rest steht, welcher ausgewählt ist aus der Gruppe bestehend aus 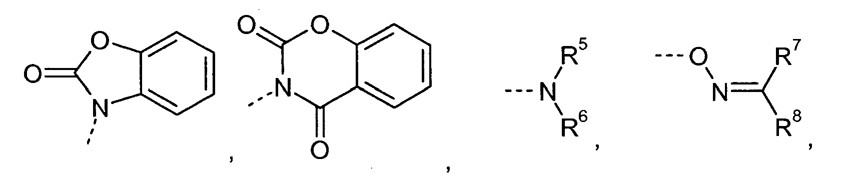 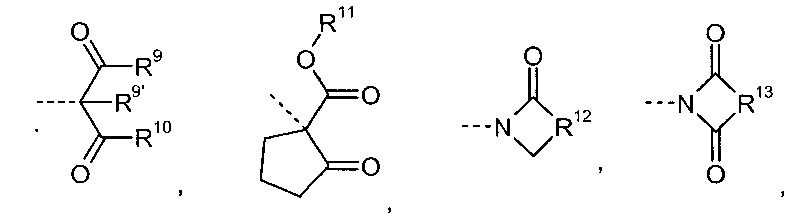 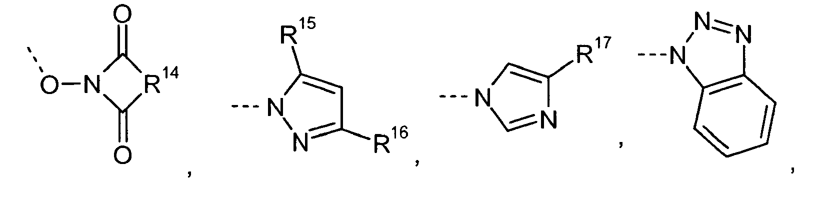 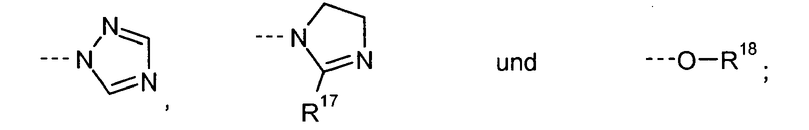 wobei
R⁵, R⁶, R⁷ und R⁸ je unabhängig voneinander für eine Alkyl- oder Cycloalkyl- oder Aryl- oder Aralkyl- oder Arylalkyl-Gruppe steht oder R⁵ zusammen mit R⁶, oder R⁷ zusammen mit R⁸, einen Teil eines 4- bis 7- gliedrigen Rings bilden, welcher allenfalls substituiert ist;
R⁹, R^{9'} und R¹⁰ je unabhängig voneinander für eine Alkyl- oder Aralkyl- oder Aryl- oder Arylalkyl-Gruppe oder für eine Alkyloxy- oder Aryloxy- oder Aralkyloxy-Gruppe steht;
R¹¹ für eine Alkylgruppe steht,
R¹², R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen;
R¹⁵, R¹⁶ und R¹⁷ je unabhängig voneinander für H oder für eine Alkylgruppe oder für eine Arylgruppe oder eine Aralkylgruppe stehen; und
R¹⁸ für eine Aralkylgruppe oder für eine ein- oder mehrkernige substituierte oder unsubstituierte Aromatengruppe steht, welche gegebenenfalls aromatische Hydroxylgruppen aufweist.

11. Hitzehärtende Epoxidharzzusammensetzung gemäss einem der Ansprüche 4 bis 10, **dadurch gekennzeichnet, dass** die hitzehärtende Epoxidharzzusammensetzung weiterhin einen Epoxidgruppen-tragenden Reaktivverdünner **G**, insbesondere in einer Menge von 0.1 - 20 Gew.-%, bezogen auf das Gewicht der hitzehärtenden Epoxidharzzusammensetzung, enthält.

12. Zweikomponentige Epoxidharzzusammensetzung bestehend aus einer Harzkomponente **K1** und einer Härterkomponente **K2,** wobei
- die Harzkomponente **K1** mindestens ein Epoxidharz **EH** mit durchschnittlich mehr als einer Epoxidgruppe pro Molekül sowie mindestens eine Verbindung der Formel (I) gemäss einem der Ansprüche 1 bis 3 umfasst; und wobei
- die Härterkomponente **K2** mindestens ein Polyamin **B2** und/oder Polymercaptan **B3** umfasst.

13. Ausgehärtete Zusammensetzung erhalten durch Erhitzen und nachfolgendem Vernetzen einer hitzehärtenden Epoxidharzzusammensetzung gemäss einem der Ansprüche 4 bis 11 oder durch das Mischen der Harzkomponente **K1** und der Härterkomponente **K2** und nachfolgendem Vernetzen einer zweikomponentigen Epoxidharzzusammensetzung gemäss Anspruch 12.

14. Verwendung einer hitzehärtenden Epoxidharzzusammensetzung gemäss einem der Ansprüche 4 bis 11 oder einer zweikomponentigen Epoxidharzzusammensetzung gemäss Anspruch 12 als Klebstoff.

15. Verwendung einer hitzehärtenden Epoxidharzzusammensetzung gemäss einem der Ansprüche 4 bis 11 oder einer zweikomponentigen Epoxidharzzusammensetzung gemäss Anspruch 12, **dadurch gekennzeichnet, dass** die hitzehärtende Epoxidharzzusammensetzung oder die zweikomponentige Epoxidharzzusammensetzung zusätzlich ein chemisches und/oder physikalisches Treibmittel enthält, als expandierender Klebstoff.

16. Verwendung einer Verbindung der Formel (I) gemäss einem der Ansprüche 1 bis 3 als Haftvermittler für ein Substrat S1, insbesondere ein beöltes Metall oder eine beölte Metalllegierung.

## Claims

1. Compound of the formula (I) 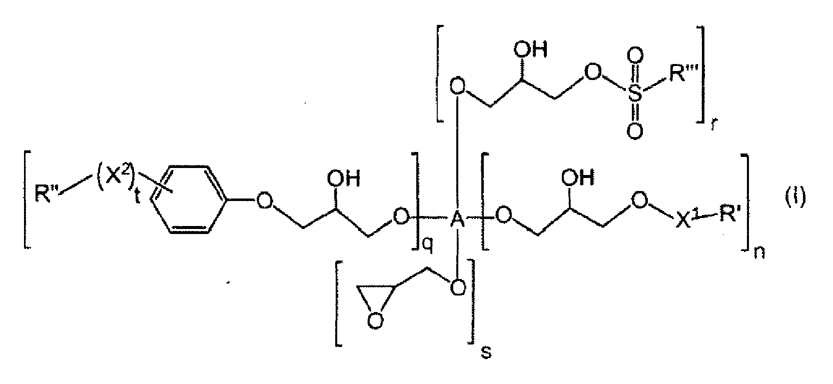 where
A is an (n + q + r + s)-hydric polyol **A1** after removal of the (n + q + r + s) hydroxyl groups,
X¹ is 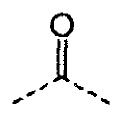 or 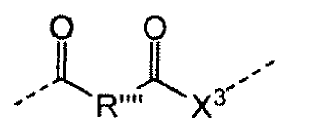 X² is 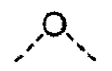 or 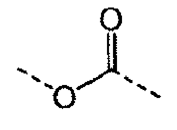 or 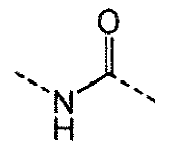 X³ is O or NH,
R' is an at most branched, saturated or unsaturated alkyl radical having 4 to 30, especially 6 to 20, carbon atoms,
R" is H or an at most branched, saturated or unsaturated alkyl radical having 1 to 30, especially 6 to 20, carbon atoms,
R"' is an alkyl radical or an alkylphenyl radical having 6 to 30, especially 6 to 20, carbon atoms,
R"" is an aromatic, cycloaliphatic or at most branched, saturated or unsaturated, aliphatic divalent radical having 1 to 10, especially 2 to 8, carbon atoms,
t has a value of 0 or 1, preferably 0,
n, q, r and s each have values of 0 to 5, with the proviso that, of the values n, q and r, at least two are different from zero,
s especially has a value of 1 or 2,
and
the sum of (n + q + r + s) is preferably 3 or 4.

2. Compound according to Claim 1, **characterized in that** the polyol **A1** is an aliphatic, cycloaliphatic or aromatic, especially an aliphatic, polyol.

3. Compound according to Claim 1 or 2, **characterized in that** the polyol **A1** is selected from the group consisting of pentaerythritol (= 2,2-bis-(hydroxymethyl)-1,3-propanediol), dipentaerythritol (= 3-(3-hydroxy-2,2-bis(hydroxymethyl)propoxy)-2,2-bis(hydroxymethyl)propan-1-ol), glycerol (= 1,2,3-propanetriol), trimethylolpropane (= 2-ethyl-2-(hydroxymethyl)-1,3-propanediol), trimethylolethane (= 2-(hydroxymethyl)-2-methyl-1,3-propanediol), di(trimethylolpropane) (= 2,2'-oxybis(ethylene)bis(2-ethylpropane-1,3-diol)), di(trimethylolethane) (= 2,2'-oxy-bis(methylene)bis(2-methylpropane-1,3-diol)), diglycerol (= bis(2,3-dihydroxypropyl) ether) and triglycerol (= 1,3-bis-(2,3-dihydroxypropyl)-2-propanol).

4. Thermosetting epoxy resin composition comprising
- at least one epoxy resin **EH** with an average of more than one epoxy group per molecule;
- at least one hardener **B** for epoxy resins, which is activated by elevated temperature; and
- at least one compound of the formula (I) according to one of Claims 1 to 3.

5. Thermosetting epoxy resin composition according to Claim 4, **characterized in that** the proportion by weight of compound of the formula (I) is 0.001 - 20% by weight, especially 0.5 - 15% by weight, preferably 4 - 10% by weight, based on the weight of the thermosetting epoxy resin composition.

6. Thermosetting epoxy resin composition according to either of Claims 4 and 5, **characterized in that** the proportion by weight of epoxy resin **EH** is 5 - 80% by weight, especially 10 - 75% by weight, preferably 15 - 70% by weight, based on the weight of the thermosetting epoxy resin composition.

7. Thermosetting epoxy resin composition according to one of Claims 4 to 6, **characterized in that** the thermosetting epoxy resin composition further comprises a toughness improver **D** which is selected from the group consisting of capped polyurethane polymers, liquid rubbers, epoxy resin-modified liquid rubbers, block copolymers and core-shell polymers, especially in an amount of 0.1 - 50% by weight, especially of 0.5 - 35% by weight, preferably of 1 - 20% by weight, based on the weight of the thermosetting epoxy resin composition.

8. Thermosetting epoxy resin composition according to one of Claims 4 to 7, **characterized in that** the thermosetting epoxy resin composition further comprises a toughness improver **D** composed of liquid rubber which is an acrylonitrile/butadiene copolymer which is terminated with carboxyl groups or (meth)acrylate groups or epoxy groups, or is a derivative thereof.

9. Thermosetting epoxy resin composition according to one of Claims 4 to 8, **characterized in that** the thermosetting epoxy resin composition further comprises a toughness improver D which is a capped polyurethane polymer of the formula (IV) 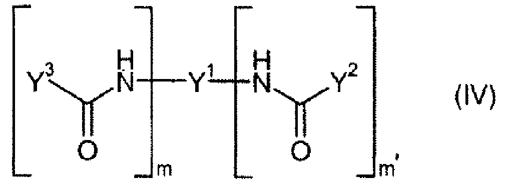 where
Y¹ is a linear or branched polyurethane polymer **PU1** terminated with m+m' isocyanate groups after the removal of all terminal isocyanate groups;
Y² is independently a capping group which is eliminated at a temperature of more than 100°C;
Y³ is independently a group of the formula (IV') 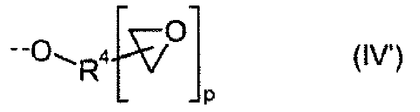 where R⁴ is a radical of an aliphatic, cycloaliphatic, aromatic or araliphatic epoxide containing a primary or secondary hydroxyl group after the removal of the hydroxyl and epoxy groups;
p = 1, 2 or 3 and
m and m' are each values from 0 to 8, with the proviso that
m+m' is a value of 1 to 8.

10. Thermosetting epoxy resin composition according to Claim 9, **characterized in that** Y² is a radical which is selected from the group consisting of 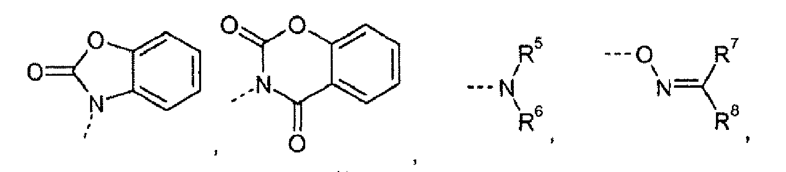 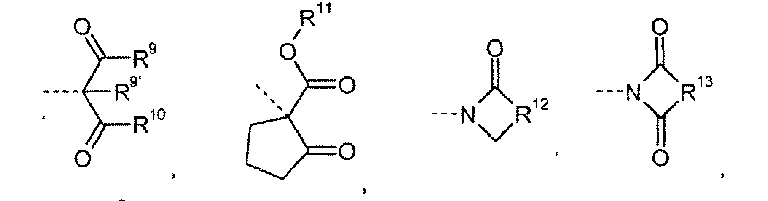 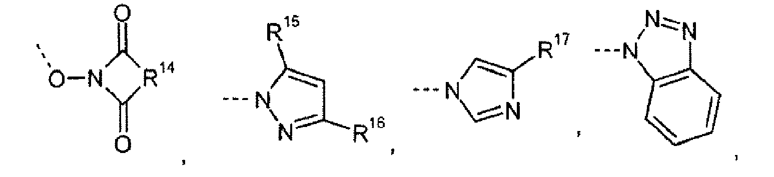 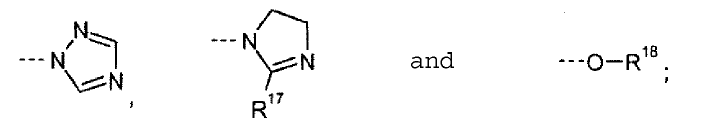 where
R⁵, R⁶, R⁷ and R⁸ are each independently an alkyl or cycloalkyl or aryl or aralkyl or arylalkyl group or R⁵ together with R⁶, or R⁷ together with R⁸, form part of a 4- to 7-membered ring which is at most substituted;
R⁹, R⁹' and R¹⁰ are each independently an alkyl or aralkyl or aryl or arylalkyl group, or an alkyloxy or aryloxy or aralkyloxy group;
R¹¹ is an alkyl group;
R¹², R¹³ and R¹⁴ are each independently an alkylene group which has 2 to 5 carbon atoms and optionally has double bonds or is substituted, or a phenylene group or a hydrogenated phenylene group;
R¹⁵, R¹⁶ and R¹⁷ are each independently H or an alkyl group or an aryl group or an aralkyl group; and
R¹⁸ is an aralkyl group or a mono- or polycyclic, substituted or unsubstituted aromatic group which optionally has aromatic hydroxyl groups.

11. Thermosetting epoxy resin composition according to one of Claims 4 to 10, **characterized in that** the thermosetting epoxy resin composition further comprises a reactive diluent **G** bearing epoxy groups, especially in an amount of 0.1 - 20% by weight, based on the weight of the thermosetting epoxy resin composition.

12. Two-component epoxy resin composition consisting of a resin component **K1** and a hardener component **K2,**
- the resin component **K1** comprising at least one epoxy resin **EH** with an average of more than one epoxy group per molecule, and at least one compound of the formula (I) according to one of Claims 1 to 3; and
- the hardener component **K2** comprising at least one polyamine **B2** and/or polymercaptane **B3.**

13. Cured composition obtained by heating and subsequent crosslinking of a thermosetting epoxy resin composition according to one of Claims 4 to 11 or by the mixing of the resin component **K1** and of the hardener component **K2** and subsequent crosslinking of a two-component epoxy resin composition according to Claim 12.

14. Use of a thermosetting epoxy resin composition according to one of Claims 4 to 11 or of a two-component epoxy resin composition according to claim 12 as an adhesive.

15. Use of a thermosetting epoxy resin composition according to one of Claims 4 to 11 or a two-component epoxy resin composition according to Claim 12, **characterized in that** the thermosetting epoxy resin composition or the two-component epoxy resin composition additionally comprises a chemical and/or physical blowing agent, as an expanding adhesive.

16. Use of a compound of the formula (I) according to one of Claims 1 to 3 as an adhesion promoter for a substrate S1, especially an oiled metal or an oiled metal alloy.

## Revendications

1. Composé de formule (I) 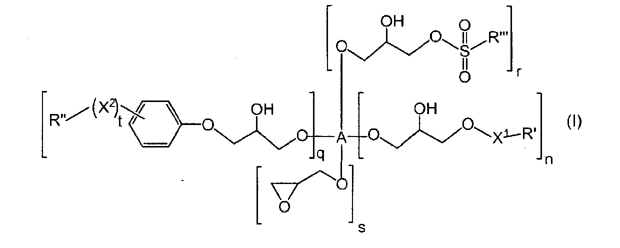 où
A représente un polyol **A1** (n + q + r + s)-valent après élimination des (n + q + r + s) groupes hydroxyle,
X¹ représente 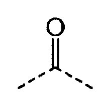 ou 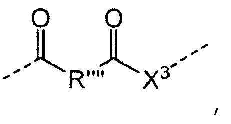
X² représente 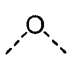 ou 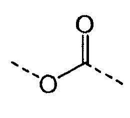 ou 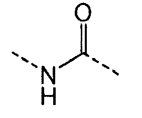
X³ représente O ou NH,
R' représente un radical alkyle le cas échéant ramifié, saturé ou insaturé comprenant 4 à 30, en particulier 6 à 20 atomes de carbone,
R" représente H ou un radical alkyle le cas échéant ramifié, saturé ou insaturé comprenant 1 à 30, en particulier 6 à 20 atomes de carbone,
R"' représente un radical alkyle ou un radical alkylphényle comprenant 6 à 30, en particulier 6 à 20 atomes de carbone,
R"" représente un radical divalent aromatique, cycloaliphatique ou aliphatique le cas échéant ramifié, saturé ou insaturé comprenant 1 à 10, en particulier 2 à 8 atomes de carbone,
t présente une valeur de 0 ou 1, de préférence 0,
n, q, r et s présentent chacun des valeurs de 0 à 5, à condition que parmi les valeurs n, q et r au moins deux soient différentes de zéro,
s présente en particulier une valeur de 1 ou 2, et la somme (n + q + r + s) vaut de préférence 3 ou 4.

2. Composé selon la revendication 1, **caractérisé en ce que** le polyol **A1** est un polyol aliphatique, cycloaliphatique ou aromatique, en particulier un polyol aliphatique.

3. Composé selon la revendication 1 ou 2, **caractérisé en ce que** le polyol **A1** est choisi dans le groupe constitué par le pentaérythritol (= 2,2-bis-hydroxyméthyl-1,3-propanediol), le dipentaérythritol (= 3-(3-hydroxy-2,2-bis-hydroxyméthylpropoxy)-2,2-bis-hydroxyméthylpropan-1-ol), le glycérol (= 1,2,3-propanetriol), le triméthylolpropane (= 2-éthyl-2-(hydroxyméthyl)-1,3-propanediol), le triméthyloléthane (= 2-(hydroxyméthyl)-2-méthyl-1,3-propanediol), le di(triméthylolpropane) (= 2,2'-oxybis(méthylène)bis(2-éthylpropane-1,3-diol)), le di(triméthyloléthane) (= 2,2'-oxybis(méthylène)bis(2-méthylpropane-1,3-diol)), le diglycérol (= bis-(2,3-dihydroxypropyl)-éther) et le triglycérol (= 1,3-bis-(2,3-dihydroxypropyl)-2-propanol).

4. Composition thermodurcissable de résine époxyde, contenant
- au moins une résine époxyde **EH** comprenant en moyenne plus d'un groupe époxyde par molécule ;
- au moins un durcisseur **B** pour résines époxydes, qui est activé par une température élevée ; ainsi que
- au moins un composé de formule (I) selon l'une quelconque des revendications 1 à 3.

5. Composition thermodurcissable de résine époxyde selon la revendication 4, **caractérisée en ce que** la proportion en poids de composé de formule (I) est de 0,001 - 20% en poids, en particulier de 0,5 - 15% en poids, de préférence de 4 - 10% en poids, par rapport au poids de la composition thermodurcissable de résine époxyde.

6. Composition thermodurcissable de résine époxyde selon l'une quelconque des revendications 4 ou 5, **caractérisée en ce que** la proportion en poids de résine époxyde **EH** est de 5 - 80% en poids, en particulier de 10 - 75% en poids, de préférence de 15 - 70% en poids, par rapport au poids de la composition thermodurcissable de résine époxyde.

7. Composition thermodurcissable de résine époxyde selon l'une quelconque des revendications 4 à 6, **caractérisée en ce que** la composition thermodurcissable de résine époxyde contient en outre un agent d'amélioration de la ténacité **D,** qui est choisi dans le groupe constitué par les polymères de polyuréthane bloqués, les caoutchoucs liquides, les caoutchoucs liquides modifiés par une résine époxyde, les copolymères à blocs et les polymères à noyau-coquille (Core-Shell), en particulier en une quantité de 0,1 - 50% en poids, en particulier de 0,5 - 35% en poids, de préférence de 1 - 20% en poids, par rapport au poids de la composition thermodurcissable de résine époxyde.

8. Composition thermodurcissable de résine époxyde selon l'une quelconque des revendications 4 à 7, **caractérisée en ce que** la composition thermodurcissable de résine époxyde contient en outre un agent d'amélioration de la ténacité **D** en caoutchouc liquide, qui est un copolymère d'acrylonitrile/butadiène, qui est terminé par des groupes carboxyle ou des groupes (méth)acrylate ou des groupes époxyde, ou un dérivé de celui-ci.

9. Composition thermodurcissable de résine époxyde selon l'une quelconque des revendications 4 à 8, **caractérisée en ce que** la composition thermodurcissable de résine époxyde présente en outre un agent d'amélioration de la ténacité **D**, qui est un polymère de polyuréthane bloqué de formule (IV), 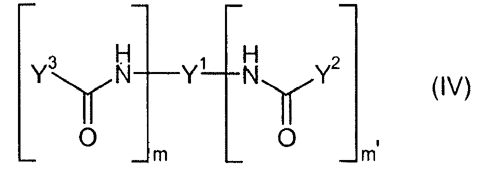 où
Y¹ représente un polymère de polyuréthane **PU1** linéaire ou ramifié terminé par m+m' groupes isocyanate après l'élimination de tous les groupes isocyanate en position terminale ;
Y² représente, indépendamment l'un de l'autre, un groupe de blocage qui se dissocie à une température supérieure à 100°C ;
Y³ représente, indépendamment l'un de l'autre, un groupe de formule (IV') 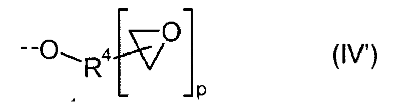 où R⁴ représente un radical d'un époxyde, contenant un groupe hydroxyle primaire ou secondaire, aliphatique, cycloaliphatique, aromatique ou araliphatique après l'élimination des groupes hydroxyde et époxyde ;
p = 1, 2 ou 3 et
m et m' représentent chacun des valeurs entre 0 et 8, à condition que m+m' présente une valeur de 1 à 8.

10. Composition thermodurcissable de résine époxyde selon la revendication 9, **caractérisée en ce que** Y² représente un radical, qui est choisi dans le groupe constitué par 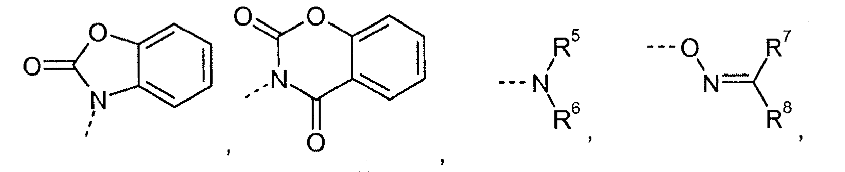 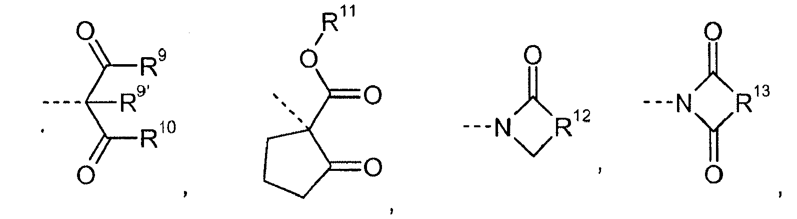 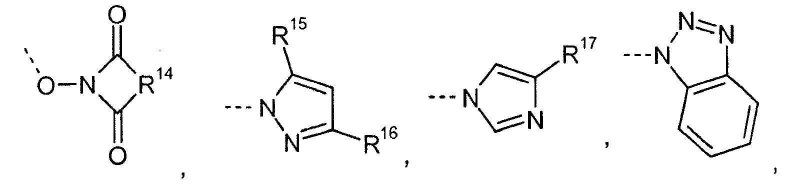 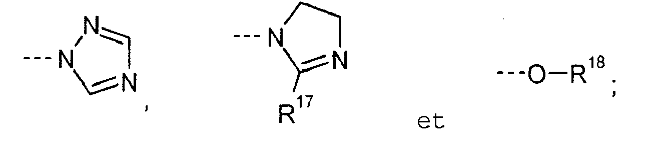 où
R⁵, R⁶, R7 et R⁸ représentent chacun indépendamment l'un de l'autre un groupe alkyle ou cycloalkyle ou aryle ou aralkyle ou arylalkyle ou R⁵ ensemble avec R⁶ ou R⁷ ensemble avec R⁸ forment une partie d'un cycle de 4 à 7 chaînons, qui est le cas échéant substitué ;
R⁹, R⁹' et R¹⁰ représentent chacun indépendamment l'un de l'autre un groupe alkyle ou aralkyle ou aryle ou arylalkyle ou un groupe alkyloxy ou aryloxy ou aralkyloxy ;
R¹¹ représente un groupe alkyle,
R¹², R¹³ et R¹⁴ représentent chacun indépendamment l'un de l'autre un groupe alkylène comprenant 2 à 5 atomes de carbone, présentant le cas échéant des doubles liaisons ou étant le cas échéant substitué, ou un groupe phénylène ou un groupe phénylène hydrogéné ;
R¹⁵, R¹⁶ et R¹⁷ représentent chacun, indépendamment l'un de l'autre, H ou un groupe alkyle ou un groupe aryle ou un groupe aralkyle ; et
R¹⁸ représente un groupe aralkyle ou un groupe aromatique à un ou plusieurs noyaux, substitué ou non substitué, qui présente le cas échéant des groupes hydroxyle aromatiques.

11. Composition thermodurcissable de résine époxyde selon l'une quelconque des revendications 4 à 10, **caractérisée en ce que** la composition thermodurcissable de résine époxyde contient en outre un diluant réactif G portant des groupes époxyde, en particulier en une quantité de 0,1 - 20% en poids, par rapport au poids de la composition thermodurcissable de résine époxyde.

12. Composition de résine époxyde à deux composants constituée par un composant résine **K1** et un composant durcisseur **K2,** où
- le composant résine **K1** comprend au moins une résine époxyde **EH** comprenant en moyenne plus d'un groupe époxyde par molécule ainsi qu'au moins un composé de formule (I) selon l'une quelconque des revendications 1 à 3 ; et où
- le composant durcisseur **K**2 comprend au moins une polyamine **B2** et/ou un polymercaptan **B3.**

13. Composition durcie obtenue par chauffage et réticulation consécutive d'une composition thermodurcissable de résine époxyde selon l'une quelconque des revendications 4 à 11 ou par mélange du composant résine **K1** et du composant durcisseur **K2** et réticulation consécutive d'une composition de résine époxyde à deux composants selon la revendication 12.

14. Utilisation d'une composition thermodurcissable de résine époxyde selon l'une quelconque des revendications 4 à 11 ou d'une composition de résine époxyde à deux composants selon la revendication 12 comme adhésif.

15. Utilisation d'une composition thermodurcissable de résine époxyde selon l'une quelconque des revendications 4 à 11 ou d'une composition de résine époxyde à deux composants selon la revendication 12, **caractérisée en ce que** la composition thermodurcissable de résine époxyde ou la composition de résine époxyde à deux composants contient en outre un agent gonflant chimique et/ou physique, comme adhésif expansible.

16. Utilisation d'un composé de formule (I) selon l'une quelconque des revendications 1 à 3 comme promoteur d'adhérence pour un substrat S1, en particulier un métal huilé ou un alliage métallique huilé.
